# EUROPÄISCHE PATENTSCHRIFT

(11) **EP 3 143 661 B1**
(45) Veröffentlichungstag und Bekanntmachung des Hinweises auf die Patenterteilung: **11.07.2018**
(21) Anmeldenummer: 15721739.9
(22) Anmeldetag: 13.05.2015
(51) Int. Cl.: H01M 10/04, H01M 6/40, H01M 6/46

(54) **MIKROBATTERIE UND VERFAHREN ZUM HERSTELLEN EINER MIKROBATTERIE**
MICRO BATTERY, AND METHOD FOR PRODUCING A MICRO BATTERY
MICROBATTERIE ET PROCÉDÉ DE FABRICATION D'UNE MICROBATTERIE

(30) Priorität: 15.05.2014 DE 102014209263
(43) Veröffentlichungstag der Anmeldung: 22.03.2017
(73) Patentinhaber: Fraunhofer Gesellschaft zur Förderung der angewandten Forschung E.V., 80686 München (DE)
(72) Erfinder: HAHN, Robert, 13156 Berlin (DE)
(74) Vertreter: Pfenning, Meinig & Partner mbB
(86) Internationale Anmeldenummer: PCT/EP2015/060619
(87) Internationale Veröffentlichungsnummer: WO 2015/173316

(56) Entgegenhaltungen:
- US-A- 6 045 942

## Beschreibung

Die Erfindung betrifft eine Mikrobatterie und ein Verfahren zum Herstellen einer Mikrobatterie.

Im Zuge einer zunehmenden Miniaturisierung in vielen Bereichen der Technik besteht eine beständig steigende Nachfrage nach möglichst kleinen, möglichst dünnen und biegbaren Batterien. Zur Anwendung kommen derartige Batterien beispielsweise in energieautarken Mikrosystemen wie miniaturisierten Funksensoren, aktiven RFID-Tags, medizinischen Implantaten oder Smartcards. Die Batterien sollen eine möglichst große Energiedichte besitzen und in ihren Abmessungen an die jeweilige Anwendung anpassbar sein. Zur Senkung der Herstellungskosten ist es vorteilhaft, möglichst viele Batteriezellen auf einem gemeinsamen Substrat anzuordnen.

Diesen Anforderungen genügen am besten sogenannte 3D-Batterien. Bei diesem Batterietyp sind die negative und die positive Elektrode nicht übereinander gestapelt, sondern in Form von nebeneinander liegenden Streifen, Quadern oder Säulen in einer Ebene angeordnet und von einem Elektrolyt umgeben. Für bestimmte Elektrodenmaterialien müssen als Stromableiter für den Pluspol und den Minuspol der Batterie unterschiedliche Metalle verwendet werden, zum Beispiel Kupfer und Aluminium. Das Abscheiden und Strukturieren der als Stromableiter dienenden Metalle auf einem gemeinsamen isolierenden Substrat ist bisher jedoch aufwändig und kostenintensiv.

In der Druckschrift WO 2009/106365 A1 wird eine 3D-Mikrobatterie beschrieben, bei der jede Elektrode einen eigenen Stromableiter besitzt. Die Stromableiter werden auf dasselbe isolierende Substrat aufgebracht. Die Kontakte können entweder an die Oberfläche des Substrats geleitet werden, oder sie können mithilfe von Durchkontaktierungen an die Unterseite des Substrats geführt werden. Zur Herstellung derartiger Kontakte sind jedoch teure Prozesse wie Vakuumabscheidung, Sputtern, Fotolithografie oder galvanische Verfahren notwendig.

Die Druckschrift US 2006/0154141 A1 beschreibt ebenfalls eine 3D-Mikrobatterie. Auf einem isolierenden Substrat werden Stromableiter für die Elektroden abgeschieden. Anschließend wird ein Elektrolyt aufgebracht, der die Stromableiter leicht überlappt. In Öffnungen dieser Elektrolytschicht werden die Elektroden hergestellt, wobei jeder Elektrode ein eigener Stromableiter zugeordnet ist. Die Elektroden sind streifenförmig oder schachbrettartig angeordnet. Auch hier kann die Herstellung nur unter Verwendung von aufwändigen und kostenintensiven Verfahren durchgeführt werden. Die Druckschrift US 6045942 beschreibt eine weitere Mikrobatterie und ein Verfahren zur deren Herstellung. Der vorliegenden Erfindung liegt daher die Aufgabe zugrunde, ein Verfahren zum Herstellen von 3D-Mikrobatterien zu entwickeln, bei dem auf die Verwendung von kostenintensiven Vakuumtechnologien möglichst weitgehend verzichtet werden kann. Die mit diesem Verfahren hergestellten 3D-Mikrobatterien sollen möglichst klein, dünn und mechanisch flexibel sein und eine möglichst große Energiedichte aufweisen.

Diese Aufgabe wird gelöst durch ein Verfahren zum Herstellen einer Mikrobatterie sowie durch eine Mikrobatterie gemäß den unabhängigen Ansprüchen. Spezielle Ausgestaltungen sind in den Unteransprüchen beschrieben.

Vorgeschlagen wird also ein Verfahren zum Herstellen einer Mikrobatterie, umfassend die Schritte:
- Bilden einer geschichteten Struktur mit einer ersten Metallschicht zur Ausbildung eines ersten Stromableiters, mit einer zweiten Metallschicht zur Ausbildung eines zweiten Stromableiters und mit einer zwischen der ersten Metallschicht und der zweiten Metallschicht angeordneten Isolatorschicht, so dass die Isolatorschicht die erste Metallschicht elektrisch von der zweiten Metallschicht isoliert;
- bereichsweises Strukturieren der zweiten Metallschicht und der Isolatorschicht zum Freilegen wenigstens eines ersten Elektrodenkontaktbereichs der ersten Metallschicht an einer der Isolatorschicht zugewandten Oberseite der ersten Metallschicht;
- Ausbilden wenigstes einer ersten Elektrode derart, dass die erste Elektrode die erste Metallschicht jeweils im freigelegten ersten Elektrodenkontaktbereich elektrisch kontaktiert und dass die erste Elektrode durch die Isolatorschicht und die zweite Metallschicht hindurchgreift und über eine von der Isolatorschicht abgewandte Oberseite der zweiten Metallschicht hinaus ragt;
- Ausbilden wenigstens einer Separatorstruktur derart, dass die Separatorstruktur jeweils die erste Elektrode umschließt oder umwandet und sich von der Oberseite der ersten Metallschicht wenigstens bis zur Oberseite der zweiten Metallschicht erstreckt, so dass die Separatorstruktur die erste Elektrode von der zweiten Metallschicht isoliert;
- Ausbilden wenigstens einer zweiten Elektrode auf der zweiten Metallschicht, so dass die zweite Elektrode die zweite Metallschicht elektrisch kontaktiert;
- Ausbilden eines lonenleiters derart, dass der lonenleiter die erste Elektrode und die zweite Elektrode kontaktiert, so dass Ionen über den Ionenleiter von der ersten Elektrode zur zweiten Elektrode oder von der zweiten Elektrode zur ersten Elektrode wandern können.

Vorgeschlagen wird außerdem eine Mikrobatterie, die mit diesem Verfahren herstellbar ist. Eine solche Mikrobatterie umfasst:
- eine geschichtete Struktur mit einer ersten Metallschicht, die einen ersten Stromableiter bildet, mit einer zweiten Metallschicht, die einen zweiten Stromableiter bildet, und mit einer zwischen der ersten Metallschicht und der zweiten Metallschicht angeordneten Isolatorschicht, die die erste Metallschicht elektrisch von der zweiten Metallschicht isoliert;
- wenigstens eine erste Elektrode und wenigstens eine zweite Elektrode;
- wenigstens eine Separatorstruktur;
- einen lonenleiter, der die erste Elektrode und die zweite Elektrode kontaktiert, so dass Ionen über den lonenleiter von der ersten Elektrode zur zweiten Elektrode oder von der zweiten Elektrode zur ersten Elektrode wandern können;
- wobei die erste Elektrode die erste Metallschicht an einer der Isolatorschicht zugewandten Oberseite der ersten Metallschicht elektrisch kontaktiert und wobei die erste Elektrode durch die Isolatorschicht und durch die zweite Metallschicht hindurchgreift und über eine von der Isolatorschicht abgewandte Oberseite der zweiten Metallschicht hinaus ragt;
- wobei die zweite Elektrode die zweite Metallschicht kontaktiert, vorzugsweise an der Oberseite der zweiten Metallschicht; und
- wobei die Separatorstruktur die erste Elektrode seitlich, d. h. in Ebenen, die parallel zu den Schichtebenen der geschichteten Struktur ausgerichtet sind, umschließt oder umwandet und sich dabei von der Oberseite der ersten Metallschicht wenigstens bis zur Oberseite der zweiten Metallschicht erstreckt, so dass die Separatorstruktur die erste Elektrode elektrisch von der zweiten Metallschicht isoliert.

Die Mikrobatterie wird also ausgehend von der geschichteten Struktur hergestellt. Dieser als Substrat dienende dreischichtige Aufbau ist auf einfache Wiese mittels bekannter Laminat- oder Folientechnologien herstellbar. Die so hergestellte Mikrobatterie hat daher eine besonders flache Bauform, ist äußerst biegbar und kann leicht an die Geometrie miniaturisierter Gehäuse angepasst werden. Die als erster Stromableiter dienende erste Metallschicht und/oder die als zweiter Stromableiter dienende zweite Metallschicht können gegebenenfalls wenigstens einen Teil eines Gehäuses der Batterie bilden. Dadurch können sowohl Materialkosten gesenkt als auch die Anzahl der zur Herstellung nötigen Arbeitsschritte verringert werden. Das Strukturieren der geschichteten Struktur sowie das Ausbilden der Elektroden und der Separatorstruktur kann weitestgehend oder vollständig ohne Zuhilfenahme kostenintensiver Vakuumtechnologien durchgeführt werden. Der Herstellungsprozess kann so erheblich vereinfacht und die Herstellungskosten können bedeutend gesenkt werden.

Typischerweise ist eine Oberseite der ersten Metallschicht mit einer Unterseite der Isolatorschicht zusammengefügt und mit dieser in unmittelbarem Kontakt. Eine von der ersten Metallschicht abgewandte Oberseite der isolatorschicht ist gewöhnlich mit einer Unterseite der zweiten Metallschicht zusammengefügt und mit dieser in unmittelbarem Kontakt. Eine von der Isolatorschicht abgewandte Oberseite der zweiten Metallschicht und eine von der Isolatorschicht abgewandte Unterseite der ersten Metallschicht bilden damit üblicherweise zugleich eine Ober- und eine Unterseite der geschichteten Struktur.

Hier und im Folgenden wird eine senkrecht zu den Schichtebenen der geschichteten Struktur verlaufende Richtung auch Z-Richtung genannt. Entsprechend sind die Schichtebenen der geschichteten Struktur parallel zu einer X-Y-Ebene ausgerichtet, wobei die X-, Y-, und Z-Achse ein rechtshändiges kartesisches Koordinatensystem aufspannen. Eine entlang der Z-Richtung bestimmte Dicke der geschichteten Struktur kann weniger als 1 mm, vorzugweise weniger als 0,6 mm, besonders bevorzugt weniger als 0,2 mm betragen. Eine Dicke der ersten Metallschicht und/oder der zweiten Metallschicht kann weniger als 0,5 mm, weniger als 0,1 mm, weniger als 0,05 mm oder weniger als 0,02 mm betragen. Eine Dicke der Isolatorschicht kann weniger 0,05 mm weniger als 0,01 mm oder weniger als 0,005 mm betragen. Eine auf einem derart dünnen dreischichtigen Substrat basierende Mikrobatterie ist mechanisch besonders flexibel und lässt sich in besonders platzsparender Weise in ein Anwendungssystem integrieren. Ein solches Anwendungssystem kann zum Beispiel ein Funksensor, ein RFID-Tag, ein medizinisches Implantat oder eine Smartcard sein.

Die erste Metallschicht und/oder die zweite Metallschicht kann durch eine Metallfolie gegeben sein. Die Isolatorschicht kann als Klebstoffschicht oder als eine Schicht aus einem thermoplastischen Kunststoff ausgebildet sein. Insbesondere kann die Isolatorschicht eines der folgenden Materialien enthalten: Si₃N₄, SiO₂, Al₂O₃, ein Parylen oder ein Polyolefin, insbesondere Polyethylen, Polypropylen oder Cast Polypropylen (CPP), Polymethylmethacrylat (PMMA), ein Epoxidharz oder ein Polyimid. Die Isolatorschicht kann zum Beispiel durch reaktives Bedampfen oder durch chemische Gasphasenabscheidung (Chemical Vapor Deposition, CVD) auf die erste Metallschicht und/oder auf die zweite Metallschicht aufgebracht werden. Die Herstellung der geschichteten Struktur kann auch mittels Laminieren vorgenommen werden.

Jede der beiden Metallschichten kann den Pluspol oder den Minuspol der Mikrobatterie bilden oder kontaktieren. Die erste Metallschicht kann aus Aluminium gebildet sein. Sie bildet dann vorzugsweise den Pluspol der Mikrobatterie. Die zweite Metallschicht kann aus Kupfer gebildet sein. Sie bildet dann vorzugsweise den Minuspol der Mikrobatterie.

Die vorstehend aufgeführten Schritte zum Herstellen der Mikrobatterie müssen nicht notwendigerweise in der angegebenen zeitlichen Reihenfolge durchgeführt werden. Da die Separatorstruktur insbesondere dazu dient, die erste Elektrode von der zweiten Metallschicht und/oder von der zweiten Elektrode zu trennen und elektrisch zu isolieren, kann es zum Beispiel vorteilhaft sein, nach dem Freilegen des ersten Elektrodenkontaktbereichs an der Oberseite der ersten Metallschicht zuerst die Separatorstruktur auszubilden und erst danach die erste Elektrode im ersten Elektrodenkontaktbereich abzuscheiden oder aufzubringen. Auf diese Weise kann zum Beispiel verhindert werden, dass es beim Ausbilden der ersten Elektrode zu einem Kurzschluss zwischen der ersten Elektrode und der zweiten Metallschicht kommt.

Das bereichsweise Strukturieren der zweiten Metallschicht an der Oberseite der geschichteten Struktur zum Freilegen des ersten Elektrodenkontaktbereichs kann mittels Nassätzen, mittels Laserablation oder mittels eines mechanischen Verfahrens, insbesondere durch Bohren, Fräsen, Schneiden oder Stanzen vorgenommen werden. Das bereichsweise Strukturieren der Isolatorschicht zum Freilegen des ersten Elektrodenkontaktbereichs kann mittels Trockenätzen, mittels Laserablation oder ebenfalls mittels eines mechanischen Verfahrens vorgenommen werden, insbesondere also durch Bohren, Fräsen, Schneiden oder Stanzen. Zum Freilegen des ersten Elektrodenkontaktbereichs, der ein Teilbereich der Oberseite der ersten Metallschicht ist, wird also typischerweise an der Oberseite der geschichteten Struktur eine Öffnung in die zweite Metallschicht und/oder in die Islolatorschicht eingebracht. Diese Öffnung erstreckt sich dann von der Oberseite der zweiten Metallschicht durch die zweite Metallschicht und durch die Isolatorschicht bis zur Oberseite der ersten Metallschicht. Der erste Elektrodenkontaktbereich bildet somit einen Boden der genannten Öffnung. Die erste Elektrode wird gewöhnlich von der Oberseite der geschichteten Struktur aus im ersten Elektrodenkontaktbereich auf die erste Metallschicht aufgebracht oder auf der ersten Metallschicht abgeschieden.

Bei speziellen Ausführungsformen des Verfahrens zum Herstellen der Mikrobatterie können zunächst die zweite Metallschicht und die Isolatorschicht zu einem Verbund zusammengefügt werden. Dieser Verbund kann dann anschließend zur Ausbildung der geschichteten Struktur mit der ersten Metallschicht zusammengefügt werden. Beispielsweise kann die zweite Metallschicht zur Ausbildung der Isolatorschicht an der Unterseite der zweiten Metallschicht ganzflächig beschichtet werden. Zum Strukturieren der zweiten Metallschicht und der Isolatorschicht bzw. zum Ausbilden der zuvor genannten Öffnung in der zweiten Metallschicht und der Isolatorschicht kann dann ein Durchgangsloch in den Verbund aus zweiter Metallschicht und Isolatorschicht eingebracht werden. Dies kann zum Beispiel durch Stanzen oder Bohren erfolgen. Wird nun zur Ausbildung der geschichteten Struktur der Verbund aus zweiter Metallschicht und Isolatorschicht mit der ersten Metallschicht zusammengefügt, zum Beispiel durch Laminieren, so ist der erste Elektrodenkontaktbereich an der Oberseite der ersten Metallschicht im Bereich des Durchgangsloches bereits nach dem Zusammenfügen des Verbundes mit der ersten Metallschicht freigelegt. Dies ist eine besonders einfache und kostengünstige Art und Weise der Strukturierung der zweiten Metallschicht und der Isolatorschicht zum Freilegen des ersten Elektrodenkontaktbereichs.

Es ist jedoch auch denkbar, die Unterseite der zweiten Metallschicht zur Ausbildung der Isolatorschicht nicht ganzflächig, sondern nur bereichsweise zu beschichten. Beispielsweise kann derjenige Bereich bzw. können diejenigen Bereiche der Isolatorschicht, die andernfalls zum späteren Freilegen des ersten Elektrodenkontaktbereichs oder der ersten Elektrodenkontaktbereiche strukturiert werden müssten, von vornherein ausgespart werden. Zu diesem Zweck kann beim Beschichten der zweiten Metallschicht zur Ausbildung der Isolatorschicht eine Maske oder Schablone verwendet werden. Im Verbund aus zweiter Metallschicht und Isolatorschicht weist die Isolatorschicht dann eine entsprechende Aussparung oder ein entsprechendes Durchgangsloch auf. Nach dem Zusammenfügen des Verbundes aus der zweiten Metallschicht und der Isolatorschicht mit der ersten Metallschicht zur Ausbildung der geschichteten Struktur muss zum Freilegen des ersten Elektrodenkontaktbereichs oder der ersten Elektrodenkontaktbereiche der ersten Metallschicht dann nur noch die zweite Metallschicht strukturiert werden. Auch dies kann eine Vereinfachung des Herstellungsprozesses bedeuten.

Damit die Separatorstruktur die erste Elektrode vollständig von der zweiten Metallschicht und/oder von der zweiten Elektrode trennt und isoliert, wird die Separatorstruktur vorzugsweise derart ausgebildet, dass sie die erste Elektrode seitlich, d. h. in parallel zur X-Y-Ebene ausgerichteten Ebenen, radial vollständig umschließt oder umwandet. Die Separatorstruktur kann die erste Elektrode z. B. nach Art eines Rohrabschnitts umschließen oder umwanden, wobei der Rohrquerschnitt parallel zur X-Y-Ebene eine beliebige Form haben kann. Vorzugsweise umschließt die Separatorstruktur die erste Elektrode entlang der gesamten entlang der Z-Richtung bestimmten Länge der ersten Elektrode jeweils radial vollständig. Die erste Elektrode, die zweite Elektrode und die Separatorstruktur können also derart ausgebildet werden, dass sich die Separatorstruktur von der Oberseite der ersten Metallschicht wenigstens bis zum von der ersten Metallschicht abgewandten oberen Ende der ersten Elektrode erstreckt, vorzugsweise bis über das obere Ende der ersten Elektrode hinaus, so dass die erste Elektrode und die zweite Elektrode entlang parallel zur X-Y-Ebene verlaufenden Ebenen durch die Separatorstruktur voneinander getrennt sind. Zum Beispiel kann die Separatorstruktur eine seitliche Wandung der zuvor genannten Öffnung in der zweiten Metallschicht und der Isolatorschicht, durch die der erste Elektrodenkontaktbereich freigelegt ist, vollständig auskleiden.

Beispielsweise kann die Separatorstruktur mittels Sprühbelacken, Elektrophorese, Plasmapolymerisation, Laminieren oder Siebdrucken ausgebildet werden. Zum Ausbilden der Separatorstruktur kann zum Beispiel zunächst eine weitere Isolatorschicht aufgebracht werden. Die weitere Isolatorschicht kleidet dann normalerweise die Seitenwände der Öffnung in der zweiten Metallschicht und der Isolatorschicht vollständig aus. Typischerweise bedeckt die weitere Isolatorschicht auch den ersten Elektrodenkontaktbereich an der Oberseite der ersten Metallschicht und/oder die Oberseite der zweiten Metallschicht. Zum erneuten Freilegen des ersten Elektrodenkontaktbereichs und/oder zum Freilegen wenigstens eines zweiten Elektrodenkontaktbereichs an der Oberseite der zweiten Metallschicht wird die weitere Isolatorschicht dann vorzugsweise wiederum strukturiert. Zu diesem Zweck kann die weitere Isolatorschicht zum Beispiel mittels Fotolithografie, mittels Trockenätzen oder mittels Laserablation strukturiert werden. Der wenigstens eine zweite Elektrodenkontaktbereich der zweiten Metallschicht an der Oberseite der zweiten Metallschicht dient der Kontaktierung der zweiten Metallschicht durch die zweite Elektrode.

Bei einer speziellen Ausführungsform des Verfahrens kann das Ausbilden der Separatorstruktur insbesondere die folgenden Schritte umfassen:
- Abscheiden eines temporären Fotolacks;
- bereichsweises Entfernen des temporären Fotolacks mittels Fotolithografie zum Herstellen wenigstens einer Aussparung im temporären Fotolack;
- Abscheiden einer ionisch leitfähigen Separatormasse in der Aussparung zur Ausbildung der Separatorstruktur.

Bei dieser Ausführungsform wird also die zuvor im Fotolack hergestellte Aussparung zur Ausbildung der Separatorstruktur mit der ionisch leitfähigen Separatormasse gefüllt. Typischerweise wird dann in einem nächsten Schritt der übrige Fotolack entfernt. Die ionisch leitfähige Separatormasse, aus der die Separatorstruktur gebildet wird, kann zum Beispiel einen Binder mit Keramikpartikeln und/oder mit Partikeln ionisch leitfähiger Gläser enthalten. Die Separatorstruktur kann zusätzlich mit einem flüssigen Elektrolyt getränkt werden. Durch das Tränken mit dem flüssigen Elektrolyten kann also die ionische Leitfähigkeit der Separatorstruktur hergestellt oder vergrößert werden. Bei dieser Ausführungsform kann der lonenleiter ganz oder wenigstens teilweise durch die Separatorstruktur gebildet werden, so dass zur Ausbildung des lonenleiters keine weitere Schicht auf die geschichtete Struktur aufgebracht werden muss. Dadurch kann eine Dicke der hergestellten Mikrobatterie verringert werden.

Das Ausbilden der ersten Elektrode und/oder der zweiten Elektrode kann durch Sputtern, reaktives Bedampfen, Siebdruck, Schablonendruck, Dispensieren oder mittels eines galvanischen Abscheidungsprozesses vorgenommen werden. Zur Verbesserung der elektrischen Kontaktfähigkeit können die erste Metallschicht und/oder die zweite Metallschicht vor dem Ausbilden der Elektroden vorbehandelt werden, vorzugsweise mittels Nassätzen, Trockenätzen oder durch Aufbringen einer mit Graphit oder mit Rußpartikeln versetzten Polymerschicht. Vorzugsweise wird die Vorbehandlung insbesondere im ersten Elektrodenkontaktbereich an der Oberseite der ersten Metallschicht und/oder im zweiten Elektrodenkontaktbereich an der Oberseite der zweiten Metallschicht vorgenommen, also dort, wo die Elektroden auf die Metallschichten aufgebracht werden.

Zur Ausbildung des lonenleiters kann ein Polymerionenleiter, ein Festkörperionenleiter, ein gelifizierender Flüssigelektrolyt oder eine mit einem Flüssigelektrolyten tränkbare poröse oder schwammartige Struktur abgeschieden werden. Um beim Aufbringen oder Abscheiden eines Flüssigelektrolyten ein Abfließen des Flüssigelektrolyten zu verhindern, kann vor dem Aufbringen oder Abscheiden des Flüssigelektrolyten ein Rahmen auf der zweiten Metallschicht angeordnet werden. Der Rahmen kann dann zum Beispiel mittels Kleben, Löten oder Ultraschallschweißen an der zweiten Metallschicht befestigt oder mit der zweiten Metallschicht verbunden werden, typischerweise an der Oberseite der zweiten Metallschicht. Nach dem Aufbringen oder Abscheiden des Flüssigelektrolyten kann der Rahmen dann mit einem Deckel abgeschlossen werden. Es ist jedoch auch denkbar, dass der Rahmen und der Deckel einteilig ausgebildet sind, wobei der Flüssigelektrolyt dann durch eine verschließbare Öffnung im Deckel eingefüllt wird.

Damit die durch das hier vorgeschlagene Verfahren hergestellte Mikrobatterie mit eine möglichst gute mechanische Stabilität aufweist, kann die geschichtete Struktur mit einem Kunststoffsubstrat zusammengefügt werden, das eine größere Dicke hat als die geschichtete Struktur. Zum Beispiel kann die geschichtete Struktur auf das Kunststoffsubstrat laminiert werden. Das Kunststoffsubstrat kann an der Unterseite der geschichteten Struktur, also insbesondere an der Unterseite der ersten Metallschicht, oder an der Oberseite der geschichteten Struktur, also insbesondere an der Oberseite der zweiten Metallschicht, mit der geschichteten Struktur zusammengefügt werden. Wenn die geschichtete Struktur und das Kunststoffsubstrat derart zusammengefügt werden, dass das Kunststoffsubstrat an der Oberseite der geschichteten Struktur angeordnet ist, wird zum Freilegen des wenigstens einen ersten Elektrodenkontaktbereichs und zum Freilegen des wenigstens einen zweiten Elektrodenkontaktbereichs normalerweise auch das Kunststoffsubstrat strukturiert. Dazu können in das Kunststoffsubstrat leicht schmale Kanäle mit einem großen Aspektverhältnis eingebracht werden. Das Aspektverhältnis bezeichnet dabei das Verhältnis zwischen einer Tiefe der in das Kunststoffsubstrat eingebrachten Kanäle zu einer senkrecht zur Tiefe dieser Kanäle bestimmten lateralen Ausdehnung der Kanäle. Das Einbringen der Kanäle in das Kunststoffsubstrat kann zum Beispiel mittels Laserbearbeitung vorgenommen werden. Eine großflächige Ausnehmung oder Vertiefung an der von der geschichteten Struktur abgewandten Oberseite des Kunststoffsubstrats kann auch durch Druckgießen, Prägen oder Fräsen hergestellt werden. Eine solche großflächige Vertiefung oder Ausnehmung im Kunststoffsubstrat kann zum Beispiel der Aufnahme des lonenleiters dienen. Der lonenleiter kann also wenigstens teilweise in der genannten großflächigen Vertiefung angeordnet sein.

Die mittels des hier beschriebenen Verfahrens hergestellte Mikrobatterie weist typischerweise eine Vielzahl von ersten Elektroden und zweiten Elektroden der genannten Art auf. Diese können zum Beispiel in Streifen oder schachbrettartig parallel in parallel zur X-Y-Ebene ausgerichteten Ebenen nebeneinander angeordnet sein. Jeder ersten Elektrode der Mikrobatterie sind dann ein erster Elektrodenkontaktbereich und eine die erste Elektrode seitlich umgebende Separatorstruktur zugeordnet. Weist die Mikrobatterie also eine Vielzahl von ersten Elektroden auf, so hat die Mikrobatterie auch ebenso viele Separatorstrukturen, die die ersten Elektroden jeweils in der beschriebenen Art und Weise umschließen oder umwanden.

Ausführungsbeispiele der Erfindung sind in den Figuren dargestellt und werden anhand der nachfolgenden Beschreibung näher erläutert. Es zeigen:
- FIG. 1: eine geschichtete Struktur mit einer ersten Metallschicht, einer zweiten Metallschicht und einer zwischen der ersten Metallschicht und der zweiten Metallschicht angeordneten Isolatorschicht;
- FIG. 2a, 2b: in zeitlicher Reihenfolge das bereichsweise Strukturieren der zweiten Metallschicht und der Isolatorschicht der geschichteten Struktur aus FIG. 1 zum Freilegen von ersten Elektrodenkontaktbereichen an einer Oberseite der ersten Metallschicht;
- FIG. 3a, 3b: ausgehend von der strukturierten geschichteten Struktur gemäß FIG. 2b das Ausbilden von Separatorstrukturen in Randbereichen der ersten Elektrodenkontaktbereiche gemäß einem ersten Ausführungsbeispiel;
- FIG. 4a, 4b: ausgehend von der Anordnung gemäß FIG. 3b das Ausbilden von ersten Elektroden und von zweiten Elektroden sowie das Ausbilden eines Ionenleiters zwischen den ersten Elektroden und den zweiten Elektroden;
- FIG. 5a, 5b: ausgehend von der Anordnung gemäß FIG. 2b das Ausbilden von Separatorstrukturen gemäß einem zweiten Ausführungsbeispiel;
- FIG. 6a bis 6c: ausgehend von der Anordnung gemäß FIG. 5b das Aufbringen zweier erster Elektroden und einer zweiten Elektrode, das Ausbilden eines lonenleiters zwischen den ersten Elektroden und der zweiten Elektrode und das Verschließen der so hergestellten Mikrobatterie mit einem Gehäuseverschluss;
- FIG. 7a bis 7d: ausgehend von der Anordnung gemäß FIG. 2b das Ausbilden von Separatorstrukturen gemäß einem dritten Ausführungsbeispiel sowie das Aufbringen zweier erster Elektroden und einer zweiten Elektrode;
- FIG. 8a, 8b: ausgehend von der Anordnung gemäß FIG. 7d das Anordnen eines Rahmens zum Aufnehmen eines Flüssigelektrolyten an der Oberseite der geschichteten Struktur sowie das Füllen des Rahmens mit einem Flüssigelektrolyten zum Ausbilden eines Ionenleiters zwischen den ersten Elektroden und der zweiten Elektrode;
- FIG. 8c bis 8e: das Verschließen der Anordnung gemäß FIG. 8b mit einem Deckel und das Versiegeln der Anordnung mit einer Barriereschicht.
- FIG. 9a bis 9c: ausgehend von der Anordnung gemäß FIG. 7d das Anordnen eines geschlossenen Rahmens zum Aufnehmen eines Flüssigelektrolyten an der Oberseite der geschichteten Struktur, das Füllen des Rahmens mit einem Flüssigelektrolyten durch eine Öffnung im Rahmen sowie das Verschließen der Öffnung;
- FIG. 10a bis 10d: ausgehend von der Anordnung gemäß FIG. 7d das Anordnen eines temporären geschlossenen Rahmens zum Aufnehmen eines Flüssigelektrolyten an der Oberseite der geschichteten Struktur, das Füllen des temporären Rahmens mit einem gelifizierenden Flüssigelektrolyten, das Entfernen des geschlossenen Rahmens nach erfolgter Gelifizierung sowie das Abdecken der so hergestellten Mikrobatterie mittels eines Gehäuseverschlusses;
- FIG. 11a, 11b: in einer Aufsicht erste und zweite Stromableiter einer erfindungsgemäßen Mikrobatterie in einer schachbrettartigen Anordnung und in einer streifenförmigen Anordnung;
- FIG. 12a, 12b: in einer Aufsicht erfindungsgemäße Mikrobatterien mit Gehäusen unterschiedlicher Geometrie;
- FIG. 13a, 13b: das Strukturieren einer geschichteten Struktur gemäß einem weiteren Ausführungsbeispiel; sowie
- FIG. 14a, 14b: das Zusammenfügen einer geschichteten Struktur mit einem Kunststoffsubstrat und das Strukturieren der geschichteten Struktur und des Kunststoffsubstrats.

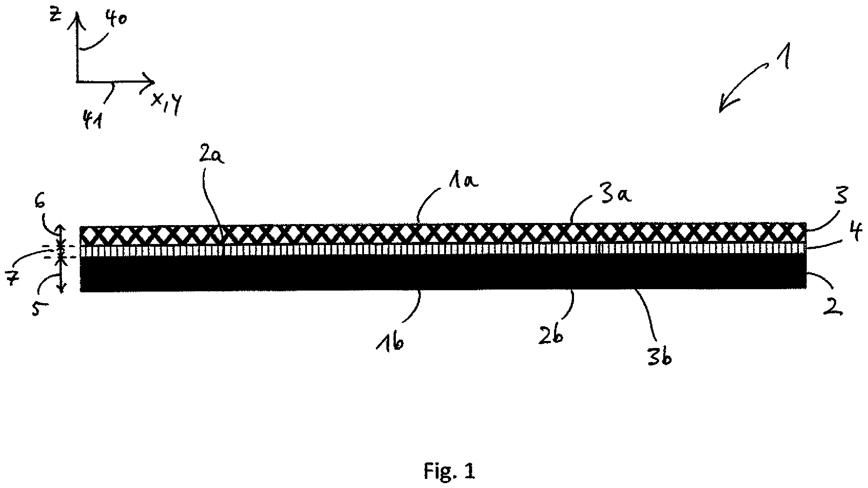

FIG. 1 zeigt eine geschichtete Struktur 1 mit einer ersten Metallschicht 2, einer zweiten Metallschicht 3 und einer zwischen der ersten Metallschicht und der zweiten Metallschicht angeordneten Isolatorschicht 4. Eine Oberseite 3a der zweiten Metallschicht bildet zugleich eine Oberseite 1a der geschichteten Struktur 1. Die zweite Metallschicht 3 ist entlang ihrer Unterseite 3b mit der Isolatorschicht 4 zusammengefügt und mit dieser in unmittelbarem Kontakt. Die erste Metallschicht 2 ist entlang ihrer Oberseite 2a mit der Isolatorschicht 4 zusammengefügt und mit dieser in unmittelbarem Kontakt. Eine Unterseite 2b der ersten Metallschicht 2 bildet zugleich eine Unterseite 1b der geschichteten Struktur 1. Durch die Isolatorschicht 4 sind die erste Metallschicht 2 und die zweite Metallschicht 3 elektrisch voneinander isoliert. Eine Z-Richtung 40 verläuft senkrecht zu den Schichtebenen der geschichteten Struktur 1, also parallel zu Flächennormalen der Metallschichten 2, 3 und der Isolatorschicht 4. Eine X-Y-Ebene 41 ist parallel zu den Schichtebenen der geschichteten Struktur 1 ausgerichtet. Die X-, Y- und die Z-Achse bilden dabei ein rechtshändiges Kartesisches Koordinatensystem. Im Folgenden wird beschrieben, wie ausgehend von der geschichteten Struktur 1 eine 3D-Mikrobatterie hergestellt wird. Die Metallschichten 2 und 3 dienen dabei als Stromableiter der Mikrobatterie.

Im hier gezeigten Ausführungsbeispiel ist die erste Metallschicht 2 aus Aluminium gebildet. Die erste Metallschicht 2 bildet den Pluspol der Mikrobatterie. Die zweite Metallschicht 3 ist aus Kupfer gebildet und bildet den Minuspol der Mikrobatterie. Die erste Metallschicht 2 ist eine Aluminiumfolie mit einer Dicke 5 von 50 µm. Die zweite Metallschicht 3 ist eine Kupferfolie mit einer Dicke 6 von z. B. 5µm. Die Isolatorschicht 4 enthält ein Polymer, zum Beispiel Polypropylen oder Polyethylen. Hier beträgt eine Dicke 7 der Isolatorschicht 4 zum Beispiel 20 µm. Die Dicken 5, 6, 7 werden entlang der Z-Richtung 40 bestimmt. Zur Herstellung der geschichteten Struktur 1 wird zum Beispiel zunächst die Unterseite 3b der zweiten Metallschicht 3 mit der Isolatorschicht 4 beschichtet, und anschließend wird dieser Verbund aus zweiter Metallschicht 3 und Isolatorschicht 4 auf die Oberseite 2a der ersten Metallschicht 2 laminiert. Die geschichtete Struktur 1 kann also in einfacher und kostengünstiger Weise mittels bekannter Laminat- oder Folientechnologien hergestellt werden.

Selbstverständlich können bei alternativen Ausführungsformen die Metallschichten 2 und 3 aus anderen leitenden Materialien, insbesondere Metallen, und die Isolatorschicht 4 aus anderen isolierenden Materialien gebildet sein. Ebenso können die Schichten 2, 3 und 4 von dem in FIG. 1 dargestellten Ausführungsbeispiel abweichende Dicken aufweisen. Auch kann die geschichtete Struktur 1 durch andere Verfahren als durch Laminieren hergestellt werden. Beispielsweise kann wenigstens eine der Metallschichten 2 und 3 durch Sputterbeschichtung oder durch galvanische Abscheidung erzeugt werden. Die Isolatorschicht 4 kann bei alternativen Ausführungsformen beispielsweise ein Dünnglas wie Si₃N₄, SiO₂ oder Al₂O₃ enthalten. Derartige Dünnglasschichten können eine Dicke von weniger als 5 µm, oder von weniger als einem 1 µm haben. Die Herstellung einer solchen Dünnglasschicht kann zum Beispiel durch reaktives Bedampfen oder durch chemische Gasphasenabscheidung (Chemical Vapor Deposition, CVD) vorgenommen werden. Zur Herstellung der Mikrobatterie kann die geschichtete Struktur 1 auch auf ein Substrat aufgebracht werden, zum Beispiel auf ein Glassubstrat oder auf ein Siliziumsubstrat. Typischerweise ist die geschichtete Struktur 1 dann mit ihrer Unterseite 1b auf diesem Substrat angeordnet. Alternativ oder zusätzlich kann auch an der Oberseite 1a der geschichteten Struktur 1 ein Substrat auf die geschichtete Struktur 1 aufgebracht oder mit der geschichteten Struktur 1 zusammengefügt werden. Bei dem auf die Oberseite 1a der geschichteten Struktur 1 aufgebrachten Substrat handelt es sich dann typischerweise um ein Kunststoffsubstrat.

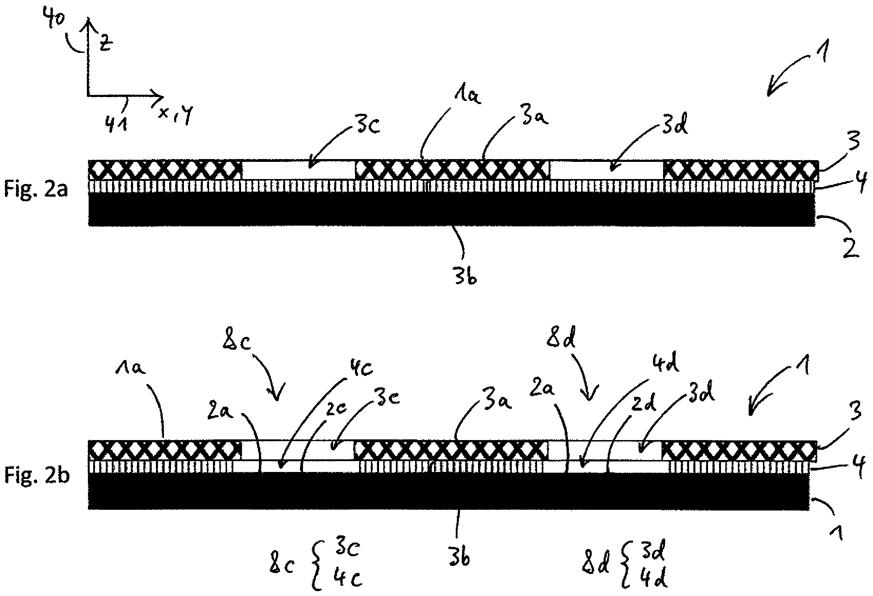

Die FIG. 2a und 2b zeigen das bereichsweise Strukturieren der geschichteten Struktur 1 aus FIG. 1 zum Freilegen von ersten Elektrodenkontaktbereichen 2c und 2d der ersten Metallschicht 2 an der der Isolatorschicht 4 zugewandten Oberseite 2a der ersten Metallschicht 2. Hier und im Folgenden sind wiederkehrende Merkmale jeweils mit denselben Bezugszeichen bezeichnet. In den ersten Elektrodenkontaktbereichen 2c und 2d werden zu einem späteren Zeitpunkt erste Elektroden auf die Oberseite 2a der ersten Metallschicht 2 aufgebracht.

Zum Freilegen der ersten Elektrodenkontaktbereiche 2c und 2d werden zunächst Bereiche 3c und 3d aus der zweiten Metallschicht 3 entfernt. Das Strukturieren der zweiten Metallschicht 3 zum Entfernen der Bereiche 3c und 3d aus der zweiten Metallschicht 3 kann zum Beispiel mittels Nassätzen, durch Laserbearbeitung oder durch mechanische Bearbeitung wie Bohren, Fräsen, Schneiden oder Stanzen vorgenommen werden. Anschließend werden zum Freilegen der ersten Elektrodenkontakte 2c und 2d Bereiche 4c und 4d der Isolatorschicht 4 aus der Isolatorschicht 4 entfernt. Dies kann beispielsweise durch Trockenätzen oder, wie bei der Strukturierung der zweiten Metallschicht 3, durch Laserbearbeitung oder durch mechanische Bearbeitung der Isolatorschicht 4 erfolgen. Die entlang der Z-Richtung 40 fluchtenden Bereiche 3c, 3d und 4c, 4d bilden Öffnungen 8c und 8d in der zweiten Metallschicht 3 und in der Isolatorschicht 4. Die Öffnungen 8c und 8d erstrecken sich jeweils von der Oberseite 3a der zweiten Metallschicht 3 durch die zweite Metallschicht 3 und durch die Isolatorschicht 4 bis zur Oberseite 2a der ersten Metallschicht 2. Die ersten Elektrodenkontaktbereiche 2c und 2d an der Oberseite 2a der ersten Metallschicht 2 bilden somit jeweils einen Boden der Öffnungen 8c und 8d.

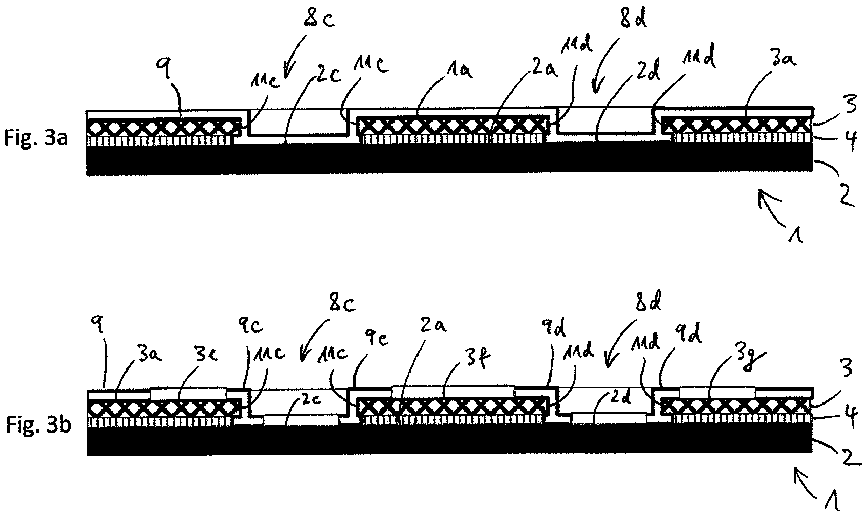

FIG. 3a und 3b zeigen das Ausbilden von Separatorstrukturen 9c und 9d, die dazu dienen, die im vorliegenden Ausführungsbeispiel erst zu einem späteren Zeitpunkt in den ersten Elektrodenkontaktbereichen 2c und 2d auf der ersten Metallschicht 2 ausgebildeten ersten Elektroden zur Vermeidung eines elektrischen Kurzschlusses von der zweiten Metallschicht 3 zu isolieren. Dazu wird zunächst eine weitere Isolatorschicht 9 auf der Oberseite 1a der geschichteten Struktur 1 abgeschieden. Die weitere Isolatorschicht 9 bedeckt die zweite Metallschicht 3 an ihrer Oberseite 3a vollständig. Ebenso bedeckt die weitere Isolatorschicht 9 die zuvor freigelegten ersten Elektrodenkontaktbereiche 2c und 2d an der Oberseite 2a der ersten Metallschicht 2 vollständig. Außerdem bedeckt die weitere Isolatorschicht 9 Seitenwände 11c der Öffnung 8c und Seitenwände 11d der Öffnung 8d vollständig, wobei sich die Seitenwände 11c, 11d entlang der Z-Richtung 40 jeweils von der Oberseite 2a der ersten Metallschicht 2 bis zur Oberseite 3a der zweiten Metallschicht 3 erstrecken. Die weitere Isolatorschicht 9 kleidet also die Öffnungen 8c und 8d vollständig aus, insbesondere auch die Seitenwände 11c und 11d. Das Ausbilden der weiteren Isolatorschicht 9 kann zum Beispiel mittels Sprühbelacken, Elektrophorese, Plasmapolymerisation oder Gasphasenabscheidung (CVD) vorgenommen werden. Eine Schichtdicke der weiteren Isolatorschicht 9 kann zum Beispiel wenigstens 0,1 µm, wenigstens 1 µm oder wenigstens 5 µm betragen.

Zum erneuten Freilegen der ersten Elektrodenkontaktbereiche 2c und 2d an der Oberseite 2a der ersten Metallschicht 2 und zum Freilegen von zweiten Elektrodenkontaktbereichen 3e, 3f und 3g der zweiten Metallschicht 3 an der Oberseite 3a der zweiten Metallschicht 3 wird dann die weitere Isolatorschicht 9 bereichsweise strukturiert. Dieses bereichsweise Strukturieren der weiteren Isolatorschicht 9 kann zum Beispiel mittels Fotolithografie, mittels Trockenätzen oder mittels Laserbearbeitung vorgenommen werden.

Nach dem bereichsweisen Strukturieren der weiteren Isolatorschicht 9 bildet diese in Randbereichen der Öffnungen 8c und 8d somit die Separatorstrukturen 9c und 9d, die sich von der Oberseite 2a der ersten Metallschicht 2 durchgehend bis zur Oberseite 3a der zweiten Metallschicht 3 erstrecken und die die Seitenwände 11c und 11d der Öffnungen 8c und 8d jeweils vollständig auskleiden. Im Bereich der Öffnungen 8c und 8d ist die zweite Metallschicht 3 zu den Öffnungen 8c und 8d hin somit vollständig von den Separatorstrukturen 9c und 9d bedeckt, so dass die Separatorstrukturen 9c und 9d verhindern, dass zu einem späteren Zeitpunkt in den ersten Elektrodenkontaktbereichen 2c und 2d auf die erste Metallschicht 2 aufgebrachte erste Elektroden mit der zweiten Metallschicht 3 in Kontakt kommen und so einen elektrischen Kurzschluss zwischen der ersten Metallschicht 2 und der zweiten Metallschicht 3 hervorrufen.

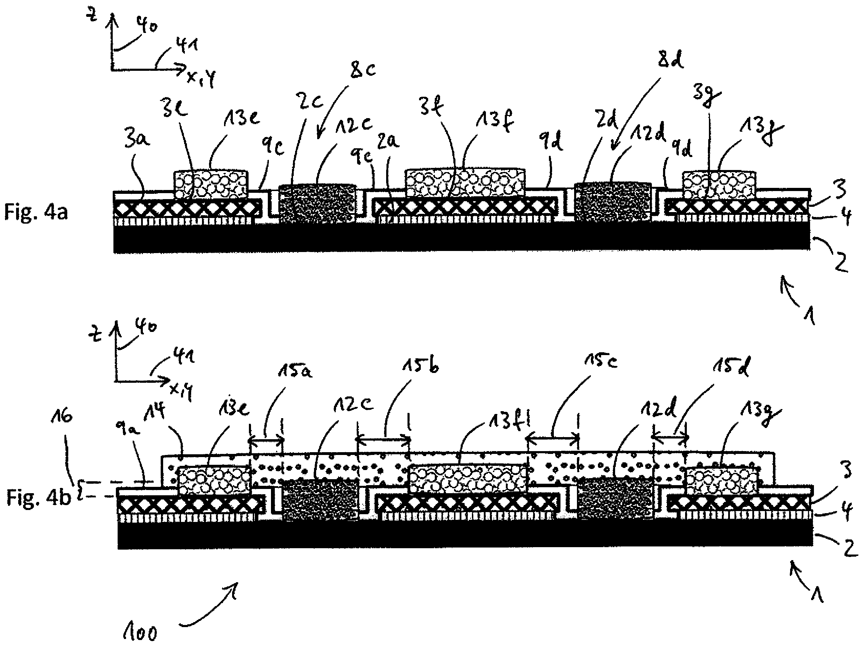

FIG. 4a und 4b zeigen ausgehend von der Anordnung gemäß FIG. 3b in zeitlicher Reihenfolge das Ausbilden von ersten Elektroden 12c und 12d, das Ausbilden von zweiten Elektroden 13e, 13f und 13g sowie das Ausbilden eines lonenleiters 14 zwischen den ersten Elektroden 12c, 12d und den zweiten Elektroden 13e, 13f und 13g. Die Anordnung gemäß FIG. 4b stellt eine erfindungsgemäße Mikrobatterie 100 dar.

Die ersten Elektroden 12c und 12d werden in den ersten Elektrodenkontaktbereichen 2c und 2d an der Oberseite 2a der ersten Metallschicht 2 auf die erste Metallschicht 2 aufgebracht. Das Ausbilden der ersten Elektroden 12c und 12d kann zum Beispiel durch Sputtern, durch reaktives Bedampfen, durch Siebdruck, Schablonendruck oder mittels eines galvanischen Abscheidungsprozesses vorgenommen werden. Die ersten Elektroden 12c und 12d werden derart ausgebildet, dass sie sich entlang der Z-Richtung 40 von der Oberseite 2a der ersten Metallschicht 2 bis über die Oberseite 3a der zweiten Metallschicht 3 erstrecken und senkrecht zu den Schichtebenen der geschichteten Struktur 1 über die Oberseite 3a der zweiten Metallschicht 3 hinausragen. Beim Aufbringen der ersten Elektroden 12c und 12d auf die erste Metallschicht 2 verhindern die Separatorstrukturen 9c und 9d, dass die ersten Elektroden 12c und 12d mit der zweiten Metallschicht 3 in Kontakt kommen und einen Kurzschluss zwischen der ersten Metallschicht 2 und der zweiten Metallschicht 3 verursachen. Die ersten Elektroden 12c und 12d sind derart in den Öffnungen 8c und 8d, die zuvor in die Isolatorschicht 4 und in die zweite Metallschicht 3 eingebracht worden sind, angeordnet, dass sie durch die Isolatorschicht 4 und die zweite Metallschicht 3 hindurch greifen und senkrecht zu den Schichtebenen der geschichteten Struktur 1 über die Oberseite 1a der geschichteten Struktur 1 hinausragen. Seitlich, das heißt parallel zur X-Y-Ebene 41, schließen die Separatorstrukturen 9c und 9d die ersten Elektroden 12c und 12d jeweils radial vollständig ein und separieren die ersten Elektroden 12c und 12d seitlich von der zweiten Metallschicht 3. Die Separatorstrukturen 9c und 9d umwanden die ersten Elektroden 12c und 12d also seitlich radial vollständig, und zwar wenigstens von der Oberseite 2a der ersten Metallschicht 2 bis zur Oberseite 3a der ersten Metallschicht 3.

Die zweiten Elektroden 13e, 13f und 13g werden in den zweiten Elektrodenkontaktbereichen 3e, 3f und 3g der zweiten Metallschicht 3 an der Oberseite 3a der zweiten Metallschicht 3 auf die zweite Metallschicht 3 aufgebracht. Auch das Ausbilden der zweiten Elektroden 13e, 13f und 13g kann durch Sputtern, durch reaktives Bedampfen, durch Siebdruck, Schablonendruck oder mittels eines galvanischen Abscheidungsprozesses vorgenommen werden.

Zur Verbesserung des elektrischen Kontaktes zwischen den ersten Elektroden 12c, 12d und der ersten Metallschicht 2 und/oder zur Verbesserung des elektrischen Kontaktes zwischen den zweiten Elektroden 13e, 13f, 13g und der zweiten Metallschicht 3 können die erste Metallschicht 2 und/oder die zweite Metallschicht 3 vor dem Ausbilden der ersten Elektroden 12c, 12d und der zweiten Elektroden 13e, 13f, 13g vorbehandelt werden. Diese Vorbehandlung der ersten Metallschicht 2 und/oder der zweiten Metallschicht 3 kann zum Beispiel durch Nassätzen oder durch Trockenätzen vorgenommen werden. Alternativ oder zusätzlich kann zum Vorbehandeln der ersten Metallschicht 2 und/oder der zweiten Metallschicht 3 eine weitere leitfähige Schicht auf die erste Metallschicht 2 und/oder auf die zweite Metallschicht 3 aufgebracht werden, zum Beispiel eine mit Graphit oder mit Rußpartikeln versetzte Polymerschicht. Das Vorbehandeln der ersten Metallschicht 2 und/oder der zweiten Metallschicht 3 wird wenigstens in den ersten Elektrodenkontaktbereichen 2c, 2d der ersten Metallschicht 2 und/oder in den zweiten Elektrodenkontaktbereichen 3e, 3f, 3g der zweiten Metallschicht 3 vorgenommen.

Die ersten Elektroden 12c, 12d und die zweiten Elektroden 13e, 13f, 13g werden derart ausgebildet, dass sie parallel zur X-Y-Ebene 41, also parallel zu den Schichtebenen der geschichteten Struktur 1 nebeneinander angeordnet sind. Parallel zur X-Y-Ebene 41 bestimmte Abstände 15a bis 15d zwischen den ersten Elektroden 12c, 12d und den zweiten Elektroden 13e, 13f, 13g können zum Beispiel jeweils weniger als 100 µm oder weniger als 50 µm betragen. Die ersten Elektroden 12c, 12d und die zweiten Elektroden 13e, 13f, 13g werden ferner derart ausgebildet, dass sie entlang der Z-Richtung 40 wenigstens bereichsweise überlappen. Bei dem in FIG. 4 gezeigten Ausführungsbeispiel überlappen die ersten Elektroden 12c, 12d mit den zweiten Elektroden 13e, 13f, 13g entlang der Z-Richtung 40 in einem Überlappungsbereich 16, der sich ausgehend von der Oberseite 3a der zweiten Metallschicht 2 über eine Länge von wenigstens 50 µm oder von wenigstens 100 µm bis zum von der geschichteten Struktur 1 abgewandten oberen Ende der ersten Elektroden 12c, 12d erstreckt.

Die geringen Abstände der ersten Elektroden 12c, 12d von den ihnen jeweils benachbarten zweiten Elektroden 13e, 13f, 13g sowohl parallel als auch senkrecht zu den Schichtebenen der geschichteten Struktur 1 erleichtern das Wandern von Ionen zwischen den ersten Elektroden 12c, 12d und den zweiten Elektroden 13e, 13f, 13g, die jeweils unterschiedlichen Polen der Mikrobatterie zugeordnet sind. Das Wandern der Ionen zwischen den ersten Elektroden 12c, 12d und den zweiten Elektroden 13e, 13f, 13g erfolgt innerhalb des lonenleiters 14, der zwischen den ersten Elektroden 12c, 12d und den zweiten Elektroden 13e, 13f, 13g ausgebildet wird. Der lonenleiter 14 wird in Gestalt einer weiteren Schicht an der Oberseite 1a der geschichteten Struktur 1 bzw. an einer Oberseite 9a der weiteren Isolatorschicht 9, die die zweite Metallschicht 3 wenigstens bereichsweise bedeckt, aufgebracht. Der Ionenleiter 14 wird derart aufgebracht, dass er die ersten Elektroden 12c, 12d und die zweiten Elektrodenschicht 13e, 13f, 13g unmittelbar kontaktiert. Der Ionenleiter 14 bildet eine zusammenhängende Schicht. Die durch den lonenleiter 14 gebildete Schicht verläuft parallel zu den Schichtebenen der geschichteten Struktur 1. Zur Ausbildung des lonenleiters 14 kann zum Beispiel ein Polymerionenleiter, ein Festkörperionenleiter, ein gelifizierender Flüssigelektrolyt oder eine mit einem Flüssigelektrolyten tränkbare schwammartige Struktur abgeschieden werden.

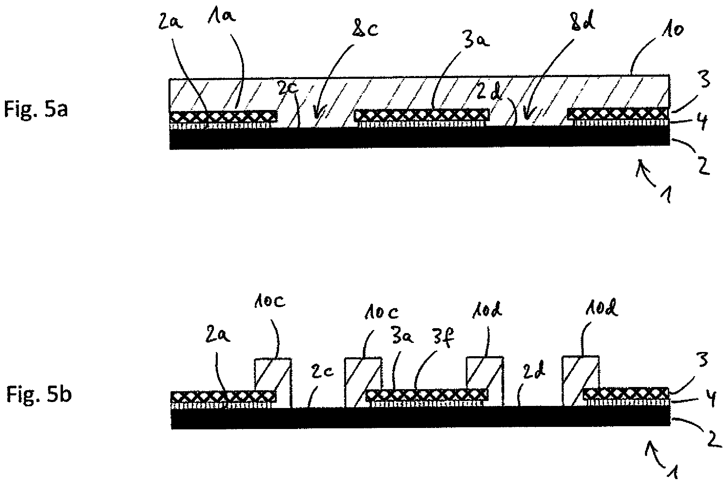

FIG. 5a und 5b zeigen ausgehend von der Anordnung gemäß FIG. 2b das Ausbilden von Separatorstrukturen 10c und 10d in den Randbereichen der Öffnungen 8c und 8d gemäß einem zweiten Ausführungsbeispiel. Zunächst wird an der Oberseite 1a der geschichteten Struktur 1 eine temporäre Fotolackschicht 10 abgeschieden. Die Fotolackschicht 10 bedeckt die Oberseite 3a der zweiten Metallschicht 3 vollständig. Auch die ersten Elektrodenkontaktbereiche 2c und 2d an der Oberseite 2a der ersten Metallschicht 2 werden von der Fotolackschicht 10 vollständig bedeckt. Die Fotolackschicht 10 wird ferner derart abgeschieden, dass sie die Öffnungen 8c und 8d in der zweiten Metallschicht 3 und in der Isolatorschicht 4 vollständig ausfüllt. Anschließend wird die Fotolackschicht 10 zum Ausbilden der Separatorstrukturen 10c und 10d mittels Fotolithografie strukturiert. Durch das Strukturieren der Fotolackschicht 10 werden die ersten Elektrodenkontaktbereiche 2c und 2d an der Oberseite 2a der Metallschicht 2 sowie der zweite Elektrodenkontaktbereich 3f an der Oberseite 3a der zweiten Metallschicht 3 freigelegt. Zur Verbesserung der elektrischen Kontaktfähigkeit der ersten Metallschicht 2 und der zweiten Metallschicht 3 können die erste Metallschicht 2 und die zweite Metallschicht 3 insbesondere in den ersten Elektrodenkontaktbereichen 2c, 2d und dem zweiten Elektrodenkontaktbereich 3f wie zuvor in Bezug auf FIG. 4 beschrieben vorbehandelt werden.

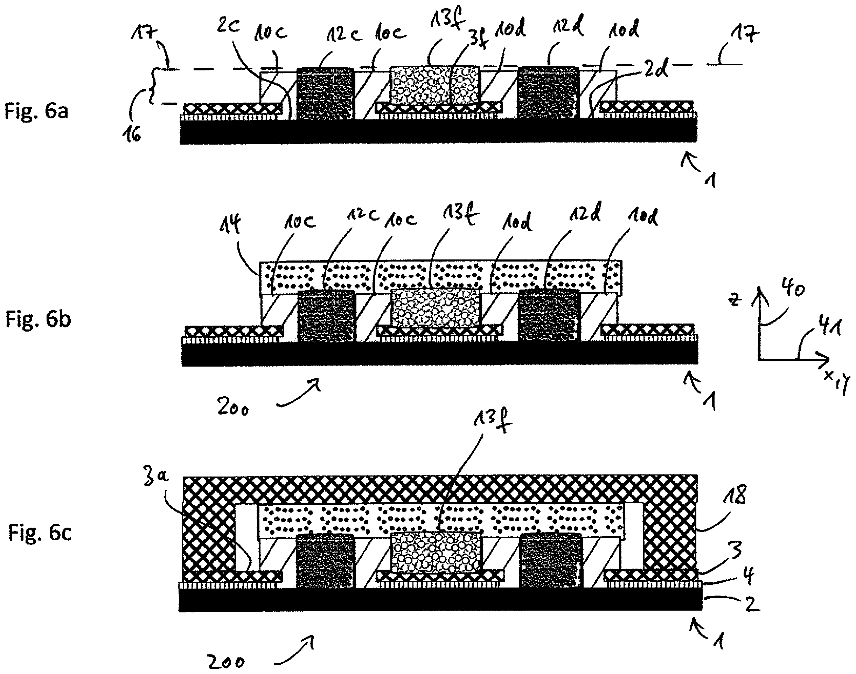

FIG. 6a zeigt das Aufbringen der ersten Elektroden 12c, 12d in den ersten Elektrodenkontaktbereichen 2c, 2d sowie das Aufbringen der zweiten Elektrode 13f auf die zweite Metallschicht 3 im zweiten Elektrodenkontaktbereich 3f. Die Anordnung gemäß FIG. 6a unterscheidet sich von der Anordnung gemäß FIG. 4a dadurch, dass die von der ersten Metallschicht 2 abgewandten oberen Enden der ersten Elektroden 12c, 12d sich entlang der Z-Richtung 40 bis zum von der zweiten Metallschicht 3 abgewandten oberen Ende der zweiten Elektrode 13f erstrecken. Die oberen Enden der ersten Elektroden 12c, 12d und der zweiten Elektrode 13f liegen also in einer gemeinsamen Ebene 17, die parallel zur X-Y-Ebene 41 ausgerichtet ist. Der Überlappungsbereich 16, in dem sich die ersten Elektroden 12c, 12d und die zweite Elektrode 13f entlang der Z-Richtung 40 überlappen, erstreckt sich in FIG. 6a somit über die gesamte Länge der zweiten Elektrode 13f, nämlich von der Oberseite 3a der zweiten Metallschicht 3 bis zur Ebene 17.

Die Anordnung gemäß FIG. 6a unterscheidet sich von der Anordnung gemäß FIG. 4a ferner dadurch, dass sich die Separatorstrukturen 10c, 10d entlang der Z-Richtung 40 jeweils von der Oberseite 2a der ersten Metallschicht bis zum von der ersten Metallschicht 2 abgewandten oberen Ende der ersten Elektroden 12c, 12d erstrecken. Ferner erstrecken sich die Separatorstrukturen 10c, 10d entlang der Z-Richtung 40 bis zum von der zweiten Metallschicht 3 abgewandten oberen Ende der zweiten Elektrode 13f. Somit ist die zweite Elektrode 13f entlang ihrer gesamten entlang der Z-Richtung 40 bestimmten Länge durch die Separatorstrukturen 10c, 10d von den ersten Elektroden 12c, 12d getrennt. Die Separatorstrukturen 10c, 10d füllen also parallel zur X-Y-Ebene 41 zwischen den ersten Elektroden 12c, 12d und der zweiten Elektrode 13f liegende Bereiche vollständig aus. Auch dies verhindert, dass es beim Aufbringen oder Abscheiden der ersten Elektroden 12c, 12d und/oder der zweiten Elektrode 13f zu einem elektrischen Kurzschluss zwischen den Elektroden 12c, 12d, 13f bzw. zwischen der ersten Metallschicht 2 und der zweiten Metallschicht 3 kommt. Die ersten Elektroden 12c, 12d sind hier also über ihre gesamte senkrecht zu den Schichtebenen der geschichteten Struktur 1 bestimmte Länge seitlich vollständig von den Separatorstrukturen 10c, 10d umschlossen, wobei die Separatorstrukturen 10c, 10d seitlich jeweils unmittelbar an die ersten Elektroden 12c, 12d heranreichen. In analoger Weise ist die zweite Elektrode 13f über ihre gesamte entlang der Z-Richtung 40 bestimmte Länge seitlich vollständig von den Separatorstrukturen 10c, 10d umschlossen, wobei die Separatorstrukturen 10c, 10d seitlich unmittelbar an die zweite Elektrode 13f heranreichen. Dies verleiht der Anordnung aus Elektroden 12c, 12d, 13f und Separatorstrukturen 10c, 10d ein hohes Maß an Kompaktheit und Stabilität.

FIG. 6b zeigt wiederum das Aufbringen des lonenleiters 14. Dieser bildet eine zusammenhängende Schicht, die an den von der geschichteten Struktur 1 abgewandten oberen Enden der ersten Elektroden 12c, 12d, der zweiten Elektrode 13f und der Separatorstrukturen 10c, 10d aufgebracht bzw. abgeschieden wird. Das Aufbringen oder Abscheiden des lonenleiters 14 kann wie zuvor in Zusammenhang mit FIG. 4b beschrieben durchgeführt werden. Die Anordnung gemäß FIG. 6b stellt eine erfindungsgemäße Mikrobatterie 200 dar.

FIG. 6c zeigt die Mikrobatterie 200 aus FIG. 6b mit einem an der Oberseite 1a der geschichteten Struktur 1 angeordneten Verschluss 18. Der Verschluss 18 schließt die Elektroden 12c, 12d, 13f und den lonenleiter 14 seitlich und nach oben, das heißt in eine von der geschichteten Struktur 1 abgewandte Richtung hin, zur Umgebung hin ab. In FIG. 6c ist der Verschluss 18 aus demselben metallischen Material gebildet wie die zweite Metallschicht 3. Der Verschluss 18 wird an der Oberseite 3a der zweiten Metallschicht 3 auf der zweiten Metallschicht 3 angeordnet und mit dieser zusammengefügt, hier zum Beispiel durch Löten. Der Verschluss 18 und die zweite Metallschicht 3 sind somit in elektrischem Kontakt. Da derjenige Abschnitt der zweiten Metallschicht 3, der die zweite Elektrode 13f elektrisch kontaktiert, mit den übrigen Abschnitten der zweiten Metallschicht 3 verbunden und in elektrischem Kontakt ist, insbesondere also mit denjenigen Abschnitten der zweiten Metallschicht 3, die mit dem Verschluss 18 in elektrischem Kontakt sind, ist der metallische Verschluss 18 über die zweite Metallschicht 3 in elektrischem Kontakt mit der zweiten Elektrode 13f und kann als Stromableiter der zweiten Elektrode 13f dienen.

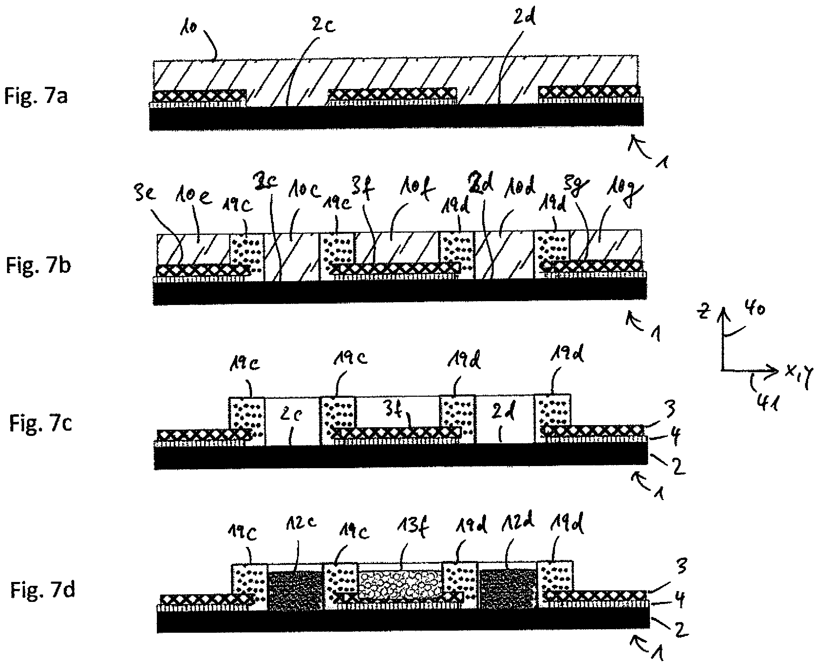

FIG. 7a bis 7d zeigen ausgehend von der Anordnung gemäß FIG. 2b das Ausbilden von Separatorstrukturen 19c, 19d gemäß einem dritten Ausführungsbeispiel. Die Separatorstrukturen 19c, 19d gemäß diesem dritten Beispiel sind elektrisch isolierend und ionisch leitfähig, so dass die Separatorstrukturen 19c, 19d selbst als lonenleiter dienen können. Bei diesem Ausführungsbeispiel kann also das erfindungsgemäße Ausbilden der Separatorstrukturen 19c, 19d und das erfindungsgemäße Ausbilden des lonenleiters zwischen den Elektroden in einem Verfahrensschritt vorgenommen werden.

Die Anordnung gemäß FIG. 7a entspricht der zuvor beschriebenen Anordnung gemäß FIG. 5a mit der an der Oberseite 1a der geschichteten Struktur 1 auf die geschichtete Struktur 1 aufgebrachten Fotolackschicht 10. Die Fotolackschicht 10 wird nun mittels Fotolithografie derart strukturiert, dass dort, wo die Separatorstrukturen 19c und 19d ausgebildet werden sollen, zunächst Aussparungen in den die Fotolackschicht 10 eingebracht werden. Diese Aussparungen sind in FIG. 7 nicht gesondert dargestellt. Nach dem Einbringen dieser Aussparungen in die Fotolackschicht 10 bleiben im Bereich der ersten Elektrodenkontaktbereiche 2c, 2d und im Bereich der zweiten Elektrodenkontaktbereiche 3e, 3f, 3g Blöcke 10c-g der Fotolackschicht 10 stehen. Diese Blöcke 10c-g bilden in Bezug auf die Fotolackschicht 10 das Negativ der Separatorstrukturen 9c und 9d gemäß FIG. 5b.

Die durch das Strukturieren der Fotolackschicht 10 zwischen den Blöcken 10c-g gebildeten Aussparungen werden dann zum Ausbilden der Separatorstrukturen 19c, 19d mit einer elektrisch isolierenden und ionisch leitfähigen Separatormasse gefüllt. Das Auffüllen der Aussparungen mit der Separatormasse oder das Abscheiden der Separatormasse in den Aussparungen zur Ausbildung der Separatorstrukturen 19c, 19d kann zum Beispiel durch Dispensieren oder durch Rakeln vorgenommen werden. Die Separatormasse kann zum Beispiel einen Binder mit Keramikpartikeln oder einen Binder mit Partikeln ionisch leitfähiger Gläser enthalten. Die auf diese Weise hergestellte Anordnung ist in FIG. 7b dargestellt. Im nächsten Schritt werden die beim Strukturieren der Fotolackschicht 10 stehen gebliebenen Blöcke 10c-g entfernt, so dass lediglich die durch das Auffüllen der Aussparungen zwischen den Blöcken 10c-g mit der Separatormasse gebildeten Separatorstrukturen 19c, 19d stehen bleiben, wie in FIG. 7c dargestellt. Die Geometrie der Separatorstrukturen 19c, 19d gemäß FIG. 7c ist identisch mit der Geometrie der Separatorstruktur 9c, 9d gemäß FIG. 5b. Bei alternativen Ausführungsformen können die Separatorstrukturen 19c, 19d gemäß FIG. 7c auch direkt durch Dispensieren der Separatormasse oder durch Drucken der Separatormasse erzeugt werden, zum Beispiel mittels Siebdruck.

In FIG. 7d sind das Aufbringen oder Abscheiden der ersten Elektroden 12c, 12d in den ersten Elektrodenkontaktbereichen 2c, 2d (siehe FIG. 7c) der ersten Metallschicht 2 sowie das Aufbringen oder Abscheiden der zweiten Elektrode 13f im zweiten Elektrodenkontaktbereich 3f (siehe FIG. 7c) der zweiten Metallschicht 3 dargestellt. Das Ausbilden oder Abscheiden der Elektroden 12c, 12d, 13f kann wie zuvor beschrieben vorgenommen werden. Die in FIG. 7d dargestellte Geometrie der Anordnung der Elektroden 12c, 12d, 13f und der Separatorstrukturen 19c, 19d unterscheidet sich von der Geometrie der Anordnung gemäß FIG. 6a lediglich dadurch, dass die Separatorstrukturen 19c, 19d sich entlang der Z-Richtung 40 über die von der geschichteten Struktur 1 abgewandten oberen Enden der Elektroden 12c, 12d, 13f hinaus erstrecken.

Da die aus der ionisch leitfähigen Separatormasse gebildeten Separatorstrukturen 19c, 19d gemäß FIG. 7d das Wandern von Ionen zwischen den ersten Elektroden 12c, 12d und der zweiten Elektrode 13f über die Separatorstrukturen 19c, 19d ermöglichen, muss zur Ausbildung eines Ionenleiters nicht notwendigerweise eine weitere Elektrolytschicht aufgebracht werden, wie dies zum Beispiel bei der Anordnung gemäß FIG. 6b der Fall ist. Gegenüber der Anordnung gemäß FIG. 6b kann eine Mikrobatterie, die gemäß den in den FIG. 7a-d beschriebenen Verfahrensschritten hergestellt wird, daher ggf. eine geringere Dicke aufweisen und besonders raumsparend ausgebildet sein.

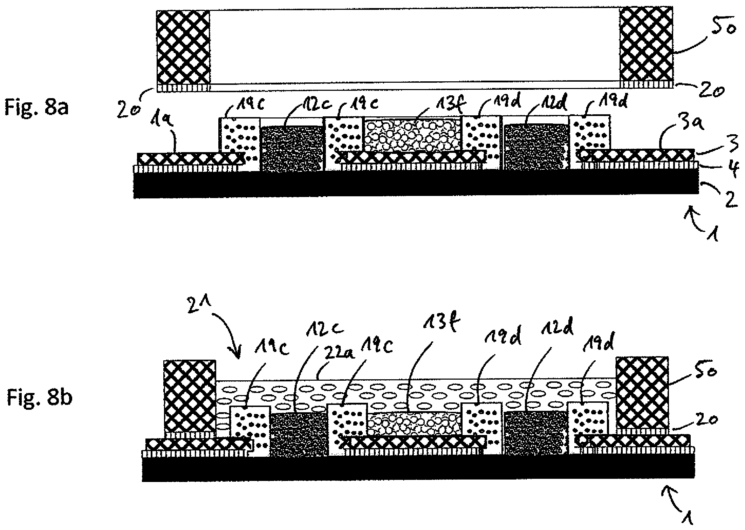

Zur Ausbildung des lonenleiters 14 können die Separatorstrukturen 19c, 19d gemäß FIG. 7d zusätzlich mit einem flüssigen Elektrolyt getränkt werden. Entsprechende Verfahrensschritte sind in zeitlicher Reihenfolge in den FIG. 8a-e dargestellt.

FIG. 8a zeigt die Anordnung gemäß FIG. 7d mit einem Rahmen 50 zum Aufnehmen eines flüssigen Elektrolyten, wobei der Rahmen 50 an der Oberseite 3a der zweiten Metallschicht 3 auf der zweiten Metallschicht 3 angeordnet und mit der zweiten Metallschicht 3 zusammengefügt wird. Das Befestigen des Rahmens 50 an der zweiten Metallschicht 3 kann zum Beispiel mittels Kleben, Löten oder Ultraschallschweißen vorgenommen werden. Sofern zum Ausbilden der Elektroden 12c, 12d, 13f Technologien verwendet werden, bei denen die Elektroden 12c, 12d, 13f auf ein möglichst planares Substrat aufgebracht werden, ist es vorteilhaft, den Rahmen 50 erst nach dem Ausbilden der Elektroden 12c, 12d, 13f an der Oberseite 1a der geschichteten Struktur 1 mit der geschichteten Struktur 1 zusammenzufügen. Technologien, die zum Ausbilden der Elektroden 12c, 12d, 13f ein möglichst planares Substrat voraussetzen, sind insbesondere das Beschichten mit Lacken und Resisten durch Schleuderbeschichtung sowie Laminieren, Fotolithografie, Siebdruck oder das Aufrakeln von Schichten. Werden die Elektroden 12c, 12d, 13f jedoch zum Beispiel mittels Projektionslithografie, Sprühbeschichtung, Beschichten mittels Dispenser oder durch direktes Laserbearbeiten ausgebildet, so kann der Rahmen gegebenenfalls auch schon vor dem Aufbringen der Elektroden mit der geschichteten Struktur 1 zusammengefügt werden. Bei dem Rahmen 50 kann es sich zum Beispiel um ein mit einem Klebstoff oder mit einem Thermoplast 20 beschichtetes Metallblech handeln.

In FIG. 8b umschließt der auf der geschichteten Struktur 1 angeordnete Rahmen 50 die Elektroden 12c, 12d, 13f und die Separatorstrukturen 19c, 19d derart, dass er einen nach oben offenen Raum 21a zum Aufnehmen eines flüssigen Elektrolyten 22a bildet, in dem die Elektroden 12c, 12d, 13f und die Separatorstrukturen 19c, 19d angeordnet sind.

In den FIG. 8b bis 8e ist der von dem Rahmen 50 gebildete Raum 21a mit dem als lonenleiter dienenden Flüssigelektrolyten 22a gefüllt. Der Rahmen 50 verhindert das seitliche Abfließen des Flüssigelektrolyten 22a. Durch das wenigstens teilweise Befüllen des Raumes 21a mit dem Flüssigelektrolyten 22a werden die ebenfalls im Raum 21a angeordneten Separatorstrukturen 19c, 19d mit dem Flüssigelektrolyten 22a getränkt.

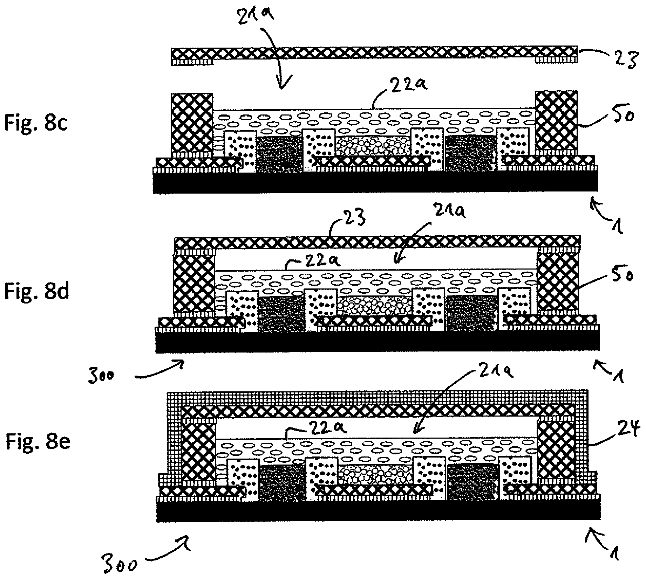

Die FIG. 8c und 8d zeigen das Verschließen des durch den Rahmen 50 gebildeten und nach oben offenen Raumes 21a mittels eines Deckels 23. Der Deckel 23 wird zum Verschließen des Raumes 21a am von der geschichteten Struktur 1 abgewandten oberen Ende des Rahmens 50 auf dem Rahmen 50 angeordnet und mit diesem zusammengefügt, zum Beispiel durch Kleben, Löten oder Ultraschallschweißen.

In FIG. 8d schließen die geschichtete Struktur 1, der Rahmen 50 und der Deckel 23 den mit dem Flüssigelektrolyten 22a gefüllten Raum 21a nach allen Seiten hin vollständig ab, so dass der Flüssigelektrolyt 22a nicht aus dem Raum 21a entweichen kann. Die Anordnung gemäß FIG. 8d stellt eine erfindungegemäße Mikrobatterie 300 dar. FIG. 8e zeigt die Mikrobatterie 300 aus FIG. 8d, die zusätzlich eine Barriereschicht 24 aufweist, mit der der Rahmens 50 und der Deckels 23 versiegelt sind. Die Barriereschicht 24 verhindert zusätzlich das Austreten des flüssigen Elektrolyten 22a aus dem Raum 21a. Die Barriereschicht 24 kann elektrisch leitend sein, so dass sie über die zweite Metallschicht 3 die zweite Elektrode 13f kontaktiert und so als Stromableiter für die zweite Elektrode 13f dienen kann.

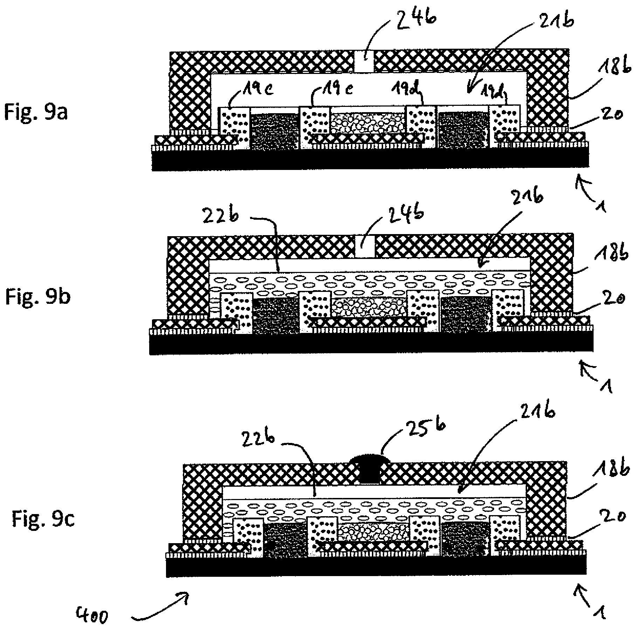

Die FIG. 9a bis 9c zeigen das Ausbilden eines Raumes 21b zum Aufnehmen eines Flüssigelektrolyten 22b, das Befüllen des Raumes 21b mit dem Flüssigkelektrolyten 22b sowie das Abschließen des Raumes 21b gegenüber der Umgebung gemäß einem zweiten Ausführungsbeispiel. Ausgangspunkt ist wiederum die Anordnung gemäß FIG. 7d, bei der die Separatorstrukturen 19c, 19d ionisch leitfähig sind. Die Anordnung gemäß den FIG. 9a bis 9c unterscheidet sich von der Anordnung gemäß FIG. 8d dadurch, der Raum 21b durch einen einteiligen Gehäuseverschluss 18b gebildet wird, der zum Befüllen des Raumes 21b mit dem Flüssigelektrolyten 22b eine Öffnung 24b aufweist, die mit einem Verschlusselement 25b verschließbar ist. In FIG. 9a wird der Gehäuseverschluss 18b wie in FIG. 8d gezeigt an der Oberseite 1a mit der geschichteten Struktur 1 zusammengefügt. FIG 9b zeigt dieselbe Anordnung nach dem Befüllen des Raumes 21b mit dem Flüssigelektrolyten 22b durch die Öffnung 24b. FIG. 9c schließlich zeigt die Anordnung aus FIG. 9b, nachdem die Öffnung 24b im Deckel 23 mit dem Verschlusselement 25b verschlossen worden ist, so dass der Flüssigelektrolyt 22b im Raum 21b eingeschlossen ist und nicht aus dem Raum 21b entweichen kann. Die Anordnung gemäß FIG. 9c stellt eine erfindungsgemäße Mikrobatterie 400 dar.

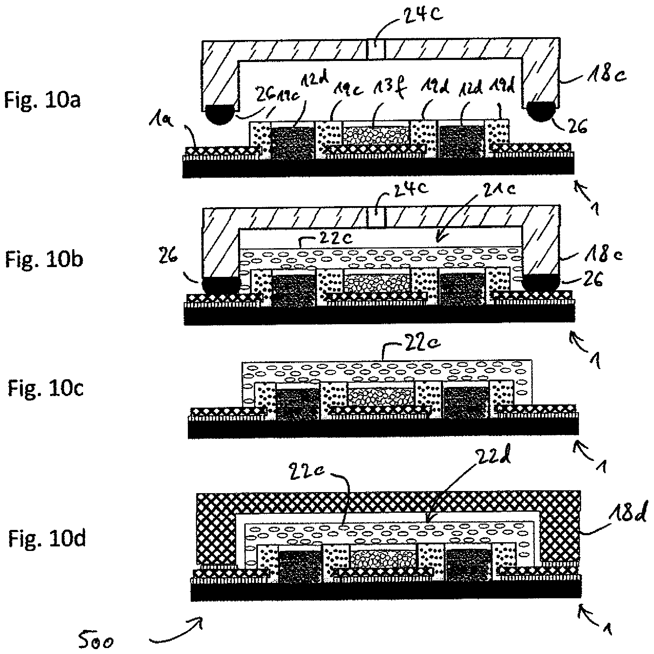

FIG. 10a bis 10d zeigen ausgehend von der Anordnung gemäß FIG. 7d das Ausbilden eines gelartigen lonenleiters, der durch einen gelifizierenden Flüssigelektrolyten 22c gebildet wird. In den FIG. 10a und 10b wird zur Ausbildung eines Raumes 21c zum Aufnehmen des gelifizierenden Flüssigelektrolyten 22c zunächst ein temporärer Gehäuseverschluss 18c auf der Oberseite 1a der geschichteten Struktur 1 angeordnet. An seiner Unterseite weist der temporäre Gehäuseverschluss 18c elastische Dichtungen 26 auf. Wenn der Verschluss 18c an der Oberseite 1a der geschichteten Struktur 1 auf die geschichtete Struktur 1 aufgesetzt wird, schließen der Verschluss 18c mit den elastischen Dichtungen 26 und die geschichtete Struktur 1 den Raum 21c vollständig ein. In dem Raum 21c sind dann auch die Elektroden 12c, 12d, 13f und die Separatorstrukturen 19c, 19d angeordnet.

Durch eine Öffnung 24c an der Oberseite des Verschlusses 18c wird der Raum 21c mit dem gelifizierenden Flüssigelektrolyten 22c befüllt (FIG. 10b). Die elastischen Dichtungen 26 verhindern dabei das Abfließen des gelifizierenden Elektrolyten 22c aus dem Raum 21c. Sobald der Flüssigelektrolyt 22c gelifiziert ist, wird der Verschluss 18c entfernt, wie in FIG. 10c dargestellt. Der nun gelifizierte Elektrolyt 22c bildet einen schichtartigen lonenleiter, der die Separatorstrukturen 19c, 19d kontaktiert. Der schichtartige lonenleiter 22c ist parallel zu den Schichten der geschichteten Struktur 1 angeordnet.

FIG. 10d zeigt einen an der Oberseite 1a der geschichteten Struktur 1 auf der geschichteten Struktur 1 angeordneten und mit dieser zusammengefügten Gehäuseverschluss 18d. Die geschichtete Struktur 1 und der Verschluss 18d schließen einen Raum 22d ein, in dem die Elektroden 12c, 12d, 13f, die Separatorstrukturen 19c, 19d und der aus dem gelifizierten Elektrolyten 22c gebildete Ionenleiter angeordnet sind. Der Verschluss 18d ist aus demselben Metall gebildet wie die zweite Metallschicht 3. Der Verschluss 18d und die zweite Metallschicht 3 können elektrisch verbunden sein, so dass der Verschluss 18d als Stromableiter für die zweite Elektrode 13f dienen kann. Die Anordnung gemäß FIG. 10d stellt eine erfindungsgemäße Mikrobatterie 500 dar.

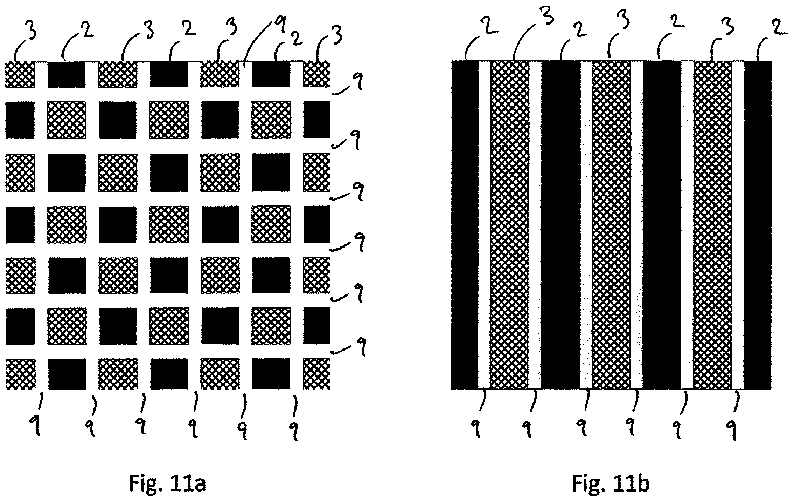

FIG. 11a und 11b zeigen jeweils eine Aufsicht auf die als Stromableiter dienenden strukturierten Metallschichten 2 (schwarz), 3 (schraffiert) und auf die zwischen den Segmenten der Metallschichten 2, 3 angeordneten Separatorstrukturen (weiß), die z. B. aus der strukturieren weiteren Isolatorschicht 9 gemäß FIG. 3b gebildet sind. Die Blickrichtung in den FIG. 11a und 11b ist die negative Z-Richtung 40. In FIG. 11a sind die einzelnen Segmente der Metallschichten 2, 3 schachbrettartig angeordnet. In der Aufsicht der FIG. 11b sind die einzelnen Segmente der Metallschichten 2, 3 in Streifen angeordnet. Die in den FIG. 11a und 11b gezeigten strukturierten Stromableiter gehören jeweils zu derselben Batteriezelle. Die den Stromableiter der ersten Elektroden bildenden Segmente der ersten Metallschicht 2 sind in den Anordnungen gemäß den FIG. 11a und 11b elektrisch miteinander verbunden und befinden sich auf demselben elektrischen Potential. Ebenso sind die den Stromableiter der zweiten Elektroden bildenden Segmente der zweiten Metallschicht 3 in den Anordnungen gemäß den FIG. 11a und 11b unterhalb der durch die strukturierte weitere Isolatorschicht 9 gebildeten Separatorstrukturen elektrisch miteinander verbunden und befinden sich auf demselben elektrischen Potential.

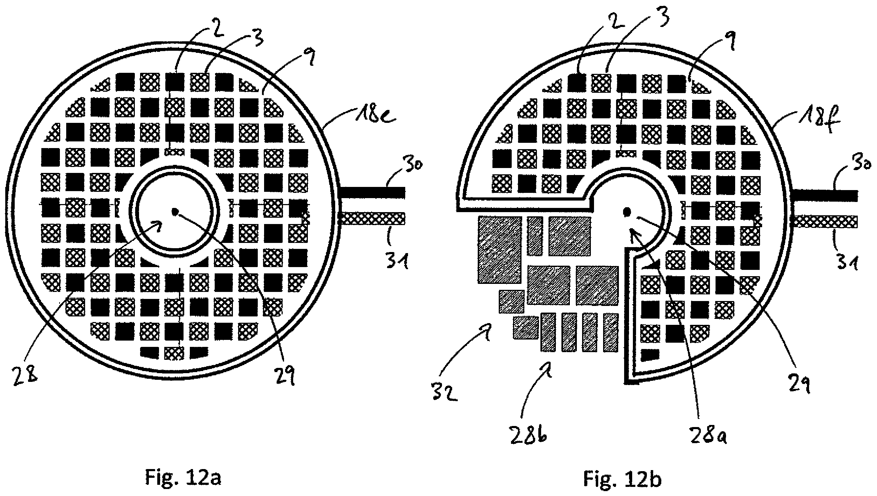

FIG. 12a und 12b zeigen wiederum in einer Aufsicht (Blickrichtung: negative Z-Richtung 40) die strukturierten Metallschichten 2 (schwarz) und 3 (schraffiert) und die durch die weitere Isolatorschicht 9 gebildeten Separatorstrukturen in der schachbrettartigen Anordnung nach FIG. 11a, die in Gehäusen 18e und 18f unterschiedlicher Geometrien angeordnet und jeweils an diese Gehäusegeometrien angepasst sind.

FIG. 12a zeigt ein rundes Gehäuse 18e mit einer zentralen runden Aussparung 28a. Das runde Gehäuse 18e und die zentrale runde Aussparung 28 sind bezüglich eines gemeinsamen Mittelpunktes 29 konzentrisch angeordnet. Stromanschlüsse 30 und 31 sind durch das versiegelte Gehäuse 18e nach außen geführt und dienen der elektrischen Kontaktierung der Metallschichten 2 und 3.

Das Gehäuse 18f aus FIG. 12b unterscheidet sich von dem Gehäuse 18e aus FIG. 12a dadurch, dass das Gehäuse 18f zusätzlich zu der zentralen Aussparung 28a eine weitere Aussparung 28b in Form eines zusammenhängenden Kreissegments 28b aufweist, das hier einen Winkel von 90° umfasst. Im Bereich der Aussparung 28b ist zum Beispiel eine Vielzahl von elektronischen Komponenten 32 angeordnet.

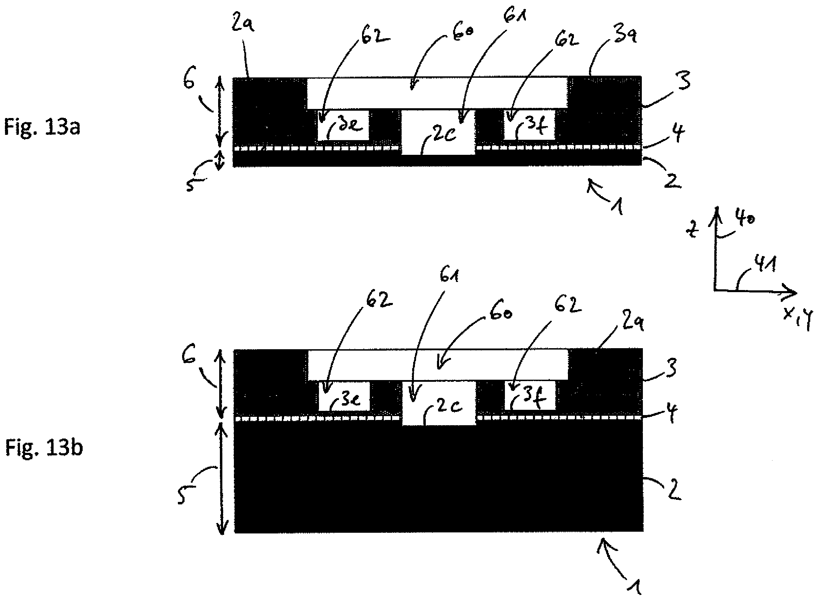

FIG. 13a und 13b zeigen weitere Ausführungsformen der in FIG. 2b gezeigten geschichteten Struktur 1 nach erfolgter Strukturierung der zweiten Metallschicht 3 und der Isolatorschicht 4 zum Freilegen des ersten Elektrodenkkontaktbereichs 2c an der Oberseite 2a der ersten Metallschicht 2 und zum Ausbilden der zweiten Elektrodenkontaktbereiche 3e und 3f der zweiten Metallschicht 3, die hier nicht an der Oberseite 3a der zweiten Metallschicht 3, sondern im Inneren der zweiten Metallschicht 3 angeordnet sind. Zum Herstellen einer Mikrobatterie mit besonders hoher mechanischer Stabilität, weist jeweils wenigstens eine der Metallschichten 2, 3 eine Dicke von 0,1 mm bis 0,5 mm auf. Die Dicken der beiden Metallschichten können sich also z. B. um einen Faktor von wenigstens oder bis zu 5, von wenigstens oder bis zu 10 oder von wenigstens oder bis zu 50 unterscheiden.

In Fig. 13a ist die erste Metallschicht 2 eine Aluminiumfolie mit einer Dicke 5 von 5-15 µm. Die zweite Metallschicht 3 ist eine Kupferfolie mit einer Dicke 6 von 100-500 µm. Die erste Metallschicht 2 wurde zur Ausbildung der geschichteten Struktur 1 auf die dickere zweite Metallschicht 3 laminiert. Zum Strukturieren der geschichteten Struktur ist es vorteilhaft, diese auf ein Trägersubstrat aufzubringen (hier nicht gezeigt). Die Anordnung gemäß Fig. 13b unterscheidet sich von der Anordnung gemäß Fig. 13a dadurch, dass die erste Metallschicht 2 hier eine Dicke 5 von 0,5-1,0 mm hat.

Zum Strukturieren der geschichteten Struktur 1 gemäß den FIG. 13a und 13b wird zunächst durch Fräsen oder durch Laserabtrag an der Oberseite 3a der zweiten Metallschicht 3 eine großflächige Vertiefung 61 eingebracht, die dem Aufnehmen eines Elektrolyten zur Ausbildung eines lonenleiters dient. Zum Freilegen des ersten Elektrodenkontaktbereichs 2c an der Oberseite 2a der ersten Metallschicht 2 wird sodann in den Boden der Vertiefung 60 eine Öffnung oder ein Kanal 61 in die zweite Metallschicht 3 eingebracht, in dem später die erste Elektrode auf die erste Metallschicht 2 aufgebracht wird. Ebenso werden in den Boden der Vertiefung 60 Öffnungen oder Kanäle 62 zum Aufnehmen der zweiten Elektroden eingebracht. Der Boden der Öffnungen oder Kanäle 62 bildet die zweiten Elektrodenkontaktbereiche der zweiten Metallschicht 3. Die Kanäle 61 und 62 können ebenfalls mittels Fräsen oder Laserabtrag gebildet werden. Das Ausbilden der Elektroden, der Separatorstrukturen und des Ionenleiters können wie zuvor beschrieben durchgeführt werden.

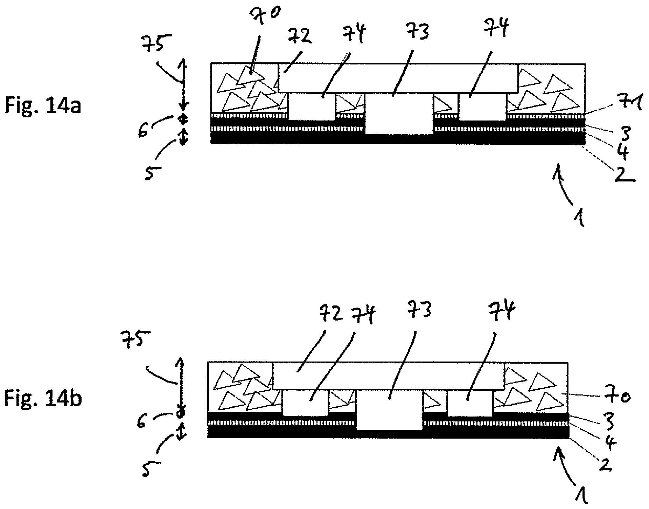

FIG. 14a und 14b zeigen die geschichtete Struktur 1, die an ihrer Oberseite mit einem Kunststoffsubstrat 70 zusammengefügt ist. Die Dicke 5 der ersten Metallschicht 2 und die Dicke 6 der zweiten Metallschicht 3 betragen z. B. jeweils weniger als 50 µm oder weniger als 20 µm. Bei der ersten Metallschicht 2 handelt es sich um eine Aluminiumfolie, bei der zweiten Metallschicht 3 um eine Kupferfolie. Eine Dicke 75 des Kunststoffsubstrats beträgt z. B. wenigstens 0,1 mm oder wenigstens 0,2 mm. In das Kunststoffsubstrat können besonders einfach schmale Kanäle mit einem hohen Aspektverhältnis eingebracht werden, in denen dann zum Kontaktieren der ersten Metallschicht 2 und der zweiten Metallschicht 3 die ersten und die zweiten Elektroden aufgebracht oder abgeschieden werden.

Die Anordnungen gemäß den FIG. 14a und 14b unterscheiden sich nur durch die Art des Zusammenfügens der geschichteten Struktur 1 mit dem Kunststoffsubstrat 70. In FIG. 14a sind beide durch eine Klebeschicht 71 an der Oberseite der geschichteten Struktur verbunden. In FIG. 14b sind die geschichtete Struktur 1 und das Kunststoffsubstrat 70 ohne eine solche Klebeschicht direkt miteinander verbunden. Dies ist z. B. dann möglich, wenn das Kunststoffsubstrat 70 zum Zusammenfügen mit der geschichteten Struktur 1 mit einem Lösungsmittel angelöst oder aufgeschmolzen werden kann.

Nach dem Zusammenfügen des Kunststoffsubstrats 70 mit der geschichteten Struktur 1 wird zunächst eine großflächige Vertiefung 72 an der von der geschichteten Struktur 1 abgewandten Oberseite des Kunststoffsubstrats 70 in das Kunststoffsubstrat 70 eingebracht, vorzugsweise durch Druckgießen, Prägen, Fräsen oder durch Laserbearbeitung. Analog der Vertiefung 60 in den FIG. 13a und 13b kann die Vertiefung 72 dem Aufnehmen eines Elektrolyten zur Ausbildung eines lonenleiters der Mikrobatterie dienen. Anschließend werden in den Boden der Vertiefung 72 Kanäle 73 und 74 zum Aufnehmen der ersten und zweiten Elektroden in das Substrat 70 eingebracht, und zwar zunächst bis zur zweiten Metallschicht 3 aus Kupfer. Das Strukturieren des Kunststoffsubstrats 70 kann beispielsweise durch Laserstrukturierung erfolgen. Im Bereich des Kanals 73 wird die kupferne zweite Metallschicht 3 dann mittels Nassätzen entfernt. Die isolatorschicht 4 kann zur Ausbildung des Kanals 73 durch Laserbearbeitung oder durch Plasmaätzen entfernt werden. Alternativ können die Kanäle 73 und 74 auch durch Mikrofräsen hergestellt werden. Das Ausbilden der Elektroden, der Separatorstrukturen und des Ionenleiters können danach wie oben beschrieben durchgeführt werden.

## Patentansprüche

1. Verfahren zum Herstellen einer Mikrobatterie (100; 200; 300; 400; 500), umfassend die Schritte:
- Bilden einer geschichteten Struktur (1) mit einer ersten Metallschicht (2) zur Ausbildung eines ersten Stromableiters, mit einer zweiten Metallschicht (3) zur Ausbildung eines zweiten Stromableiters und mit einer zwischen der ersten Metallschicht (2) und der zweiten Metallschicht (3) angeordneten Isolatorschicht (4), so dass die Isolatorschicht (4) die erste Metallschicht (2) elektrisch von der zweiten Metallschicht (3) isoliert;
- bereichsweises Strukturieren der zweiten Metallschicht (3) und der Isolatorschicht (4) zum Freilegen wenigstens eines ersten Elektrodenkontaktbereichs (2c, 2d) der ersten Metallschicht (2) an einer der Isolatorschicht (4) zugewandten Oberseite (2a) der ersten Metallschicht (2);
- Ausbilden einer ersten Elektrode (12c, 12d) derart, dass die erste Elektrode (12c, 12d) die erste Metallschicht (2) im freigelegten ersten Elektrodenkontaktbereich (2c, 2d) elektrisch kontaktiert und dass die erste Elektrode (12c, 12d) durch die Isolatorschicht (4) und die zweite Metallschicht (3) hindurchgreift und über eine von der Isolatorschicht (4) abgewandte Oberseite (3a) der zweiten Metallschicht (3) hinaus ragt;
- Ausbilden einer Separatorstruktur (9c, 9d; 10c, 10d; 19c, 19d) derart, dass die Separatorstruktur (9c, 9d; 10c, 10d; 19c, 19d) die erste Elektrode (12c, 12d) umschließt oder umwandet und sich von der Oberseite (2a) der ersten Metallschicht (2) wenigstens bis zur Oberseite (3a) der zweiten Metallschicht (3) erstreckt, so dass die Separatorstruktur (9c, 9d; 10c, 10d; 19c, 19d) die erste Elektrode (12c, 12d) von der zweiten Metallschicht (3) isoliert;
- Ausbilden wenigstens einer zweiten Elektrode (13e, 13f, 13g) auf der zweiten Metallschicht (3), so dass die zweite Elektrode (13e, 13f, 13g) die zweite Metallschicht (3) elektrisch kontaktiert;
- Ausbilden eines lonenleiters (14; 22a; 22b; 22c) derart, dass der Ionenleiter (14; 22a; 22b; 22c) die erste Elektrode (12c, 12d) und die zweite Elektrode (13e, 13f, 13g) kontaktiert, so dass Ionen über den Ionenleiter (14; 22a; 22b; 22c) von der ersten Elektrode (12c, 12d) zur zweiten Elektrode oder von der zweiten Elektrode (13e, 13f, 13g) zur ersten Elektrode (12c, 12d) wandern können.

2. Verfahren nach Anspruch 1, wobei das bereichsweise Strukturieren der zweiten Metallschicht (3) zum Freilegen des ersten Elektrodenkontaktbereichs (2c, 2d) der ersten Metallschicht (2) mittels Nassätzen, mittels Laserablation oder mittels eines mechanischen Verfahrens, insbesondere Bohren, Fräsen, Schneiden oder Stanzen vorgenommen wird und/oder wobei das bereichsweise Strukturieren der Isolatorschicht (4) zum Freilegen des ersten Elektrodenkontaktbereichs (2c, 2d) der ersten Metallschicht (2) mittels Trockenätzen, mittels Laserablation oder mittels eines mechanischen Verfahrens, insbesondere Bohren, Fräsen, Schneiden oder Stanzen vorgenommen wird.

3. Verfahren nach Anspruch 2, wobei die zweite Metallschicht (3) zur Ausbildung der Isolatorschicht (4) ganzflächig beschichtet wird, so dass die zweite Metallschicht (3) und die Isolatorschicht (4) einen Verbund bilden, wobei zum Strukturieren der zweiten Metallschicht (3) und der Isolatorschicht (4) ein Durchgangsloch in den Verbund eingebracht wird und der Verbund mit dem in den Verbund eingebrachten Durchgangsloch zur Ausbildung der geschichteten Struktur (1) auf die erste Metallschicht (2) laminiert wird, so dass der erste Elektrodenkontaktbereich (2c, 2d) an der Oberseite der ersten Metallschicht (2) im Bereich des Durchgangsloches freigelegt ist.

4. Verfahren nach einem der vorhergehenden Ansprüche, wobei zum Ausbilden der Separatorstruktur (9c, 9d; 10c, 10d; 19c, 19d) mittels Sprühbelacken, Elektrophorese, Parylene-Plasmapolymerisation, Laminieren oder Siebdrucken eine weitere Isolatorschicht (9; 10) aufgebracht wird.

5. Verfahren nach Anspruch 4, wobei die weitere Isolatorschicht (9; 10) wenigstens bereichsweise auf dem ersten Elektrodenkontaktbereich (2c, 2d) der ersten Metallschicht (2) abgeschieden wird und wobei die weitere Isolatorschicht (9; 10) zum wenigstens teilweisen Freilegen des ersten Elektrodenkontaktbereichs (2c, 2d) der ersten Metallschicht (2) mittels Fotolithographie, mittels Trockenätzen oder mittels Laserablation strukturiert wird und/oder wobei die weitere Isolatorschicht (9; 10) wenigstens bereichsweise auf der zweiten Metallschicht (3) abgeschieden wird und wobei die weitere Isolatorschicht (9; 10) zum Freilegen wenigstens eines zweiten Elektrodenkontaktbereichs (3e, 3f, 3g) der zweiten Metallschicht (3) an einer Oberseite (3a) der zweiten Metallschicht (3) mittels Fotolithographie, mittels Trockenätzen oder mittels Laserablation strukturiert wird.

6. Verfahren nach einem der Ansprüche 1 bis 3, wobei das Ausbilden der Separatorstruktur (19c, 19d) die folgenden Schritte umfasst:
- Abscheiden eines temporären Fotolacks;
- bereichsweises Entfernen des temporären Fotolacks mittels Fotolithographie zum Herstellen einer Aussparung im temporären Fotolack;
- Abscheiden einer ionisch leitfähigen Separatormasse in der Aussparung zur Ausbildung der Separatorstruktur (19c, 19d).

7. Verfahren nach Anspruch 6, wobei die Separatorstruktur (19c, 19d) zur Ausbildung des lonenleiters (14; 22a; 22b; 22c) mit einem flüssigen Elektrolyt getränkt wird.

8. Verfahren nach einem der vorhergehenden Ansprüche, wobei das Ausbilden der ersten Elektrode (12c, 12d) und/oder der zweiten Elektrode (13e, 13f, 13g) durch Sputtern, reaktives Bedampfen, Siebdruck, Schablonendruck, Dispensieren oder mittels eines galvanischen Abscheidungsprozesses vorgenommen wird.

9. Verfahren nach einem der vorhergehenden Ansprüche, wobei zur Ausbildung des lonenleiters (14; 22a; 22b; 22c) ein Polymerionenleiter, ein Festkörperionenleiter, ein gelifizierender Flüssigelektrolyt oder eine mit einem Flüssigelektrolyten tränkbare schwammartige Struktur abgeschieden wird.

10. Verfahren nach einem der vorhergehenden Ansprüche, wobei zum Aufnehmen eines Flüssigelektrolyten ein Rahmen (50; 18b) auf der zweiten Metallschicht (3) angeordnet wird, der ein Abfließen des Flüssigelektrolyten verhindert, wobei der Rahmen mittels Kleben, Löten oder Ultraschallschweißen an der zweiten Metallschicht (3) befestigt wird.

11. Verfahren nach einem der vorhergehenden Ansprüche, wobei die erste Elektrode (12c, 12d), die zweite Elektrode (13e, 13f, 13g) und die Separatorstruktur (9c, 9d; 10c, 10d; 19c, 19d) derart ausgebildet werden, dass sich die erste Elektrode (12c, 12d) von der Oberseite (2a) der ersten Metallschicht (2) bis über die Oberseite (3a) der zweiten Metallschicht (3) hinaus erstreckt und dass sich die Separatorstruktur (9c, 9d; 10c, 10d; 19c, 19d) von der Oberseite (2a) der ersten Metallschicht (2) wenigstens bis zum von der ersten Metallschicht (2) abgewandten oberen Ende der ersten Elektrode (12c, 12d) erstreckt, vorzugsweise bis über das obere Ende der ersten Elektrode (12c, 12d) hinaus, so dass die erste Elektrode (12c, 12d) und die zweite Elektrode (13e, 13f, 13g) entlang parallel zu den Schichten der geschichteten Struktur (1) verlaufenden Ebenen durch die Separatorstruktur (9c, 9d; 10c, 10d; 19c, 19d) voneinander getrennt sind.

12. Mikrobatterie (100; 200; 300; 400; 500), umfassend:
- eine geschichtete Struktur (1) mit einer ersten Metallschicht (2), die einen ersten Stromableiter bildet, mit einer zweiten Metallschicht (3), die einen zweiten Stromableiter bildet, und mit einer zwischen der ersten Metallschicht (2) und der zweiten Metallschicht (3) angeordneten Isolatorschicht (4), die die erste Metallschicht (2) elektrisch von der zweiten Metallschicht (3) isoliert;
- eine erste Elektrode (12c, 12d) und eine zweite Elektrode (13e, 13f, 13g);
- eine Separatorstruktur (9c, 9d; 10c, 10d; 19c, 19d);
- einen lonenleiter (14; 22a; 22b; 22c), der die erste Elektrode (12c, 12d) und die zweite Elektrode (13e, 13f, 13g) kontaktiert, so dass Ionen über den lonenleiter (14; 22a; 22b; 22c) von der ersten Elektrode (12c, 12d) zur zweiten Elektrode (13e, 13f, 13g) oder von der zweiten Elektrode (13e, 13f, 13g) zur ersten Elektrode (12c, 12d) wandern können;
wobei die erste Elektrode (12c, 12d) die erste Metallschicht (2) an einer der Isolatorschicht (4) zugewandten Oberseite der ersten Metallschicht (2) elektrisch kontaktiert und wobei die erste Elektrode (12c, 12d) durch die Isolatorschicht (4) und die zweite Metallschicht (3) hindurchgreift und über eine von der Isolatorschicht (4) abgewandte Oberseite der zweiten Metallschicht (3) hinaus ragt;
wobei die zweite Elektrode (13e, 13f, 13g) die zweite Metallschicht (3) kontaktiert; und
wobei die Separatorstruktur (9c, 9d; 10c, 10d; 19c, 19d) die erste Elektrode (12c, 12d) umschließt oder umwandet und sich von der Oberseite (2a) der ersten Metallschicht (2) wenigstens bis zur Oberseite (3a) der zweiten Metallschicht (3) erstreckt, so dass die Separatorstruktur (9c, 9d; 10c, 10d; 19c, 19d) die erste Elektrode (12c, 12d) elektrisch von der zweiten Metallschicht (3) isoliert.

13. Mikrobatterie (100; 200; 300; 400; 500) nach Anspruch 12, wobei die erste Metallschicht (2) zur Ausbildung und/oder zur Kontaktierung des Pluspols der Mikrobatterie (100; 200; 300; 400; 500) aus Aluminium gebildet ist und wobei die zweite Metallschicht (3) zur Ausbildung und/oder zur Kontaktierung des Minuspols der Batterie aus Kupfer gebildet ist.

14. Mikrobatterie (100; 200; 300; 400; 500) nach einem der Ansprüche 12 und 13 mit jeweils mehreren ersten (12c, 12d) und zweiten Elektroden (13e, 13f, 13g), wobei die ersten und die zweiten Elektroden (13e, 13f, 13g) in Streifen oder schachbrettartig angeordnet sind.

15. Mikrobatterie (100; 200; 300; 400; 500) nach einem der Ansprüche 12 bis 14, wobei sich die Separatorstruktur (9c, 9d; 10c, 10d; 19c, 19d) wenigstens bis zum von der ersten Metallschicht (2) abgewandten oberen Ende der ersten Elektrode (12c, 12d) erstreckt, so dass die erste Elektrode (12c, 12d) und die zweite Elektrode (13e, 13f, 13g) entlang parallel zu den Schichten der geschichteten Struktur (1) verlaufenden Ebenen durch die Separatorstruktur (9c, 9d; 10c, 10d; 19c, 19d) voneinander getrennt sind.

## Claims

1. A method for manufacturing a microbattery (100; 200; 300; 400; 500), comprising the steps:
- forming a layered structure (1) with a first metal layer (2) for forming a first current collector, with a second metal layer (3) for forming a second current collector and with an insulator layer (4) which is arranged between the first metal layer (2) and the second metal layer (3), so that the insulator layer (4) electrically insulates the first metal layer (2) from the second metal layer (3);
- regionally structuring the second metal layer (3) and the insulator layer (4), for exposing at least a first electrode contact region (2c, 2d) of the first metal layer (2) on an upper side (2a) of the first metal layer (2) which faces the insulator layer (4);
- forming a first electrode (12c, 12d), in a manner such that the first electrode (12c, 12d) electrically contacts the first metal layer (2) in the exposed, first electrode contact region (2c, 2d), and that the first electrode (12c, 12d) engages through the insulator layer (4) and the second metal layer (3) and projects beyond an upper side (3a) of the second metal layer (3) which is away from the insulator layer (4);
- forming a separator structure (9c, 9d; 10c, 10d; 19c, 19d) in a manner such that the separator structure (9c, 9d; 10c, 10d; 19c, 19d) encloses or enwalls the first electrode (12c, 12d) and extends from the upper side (2a) of the first metal layer (2) at least up to the upper side (3a) of the second metal layer (3), so that the separator structure (9c, 9d; 10c, 10d; 19c, 19d) insulates the first electrode (12c, 12d) from the second metal layer (3);
- forming at least one second electrode (13e, 13f, 13g) on the second metal layer (3), so that the second electrode (13e, 13f, 13g) electrically contacts the second metal layer (3);
- forming an ion conductor (14; 22a; 22b; 22c) in a manner such that the ion conductor (14; 22a; 22b; 22c) contacts the first electrode (12c, 12d) and the second electrode (13e, 13f, 13g), so that ions can travel via the ion conductor (14; 22a; 22b; 22c) from the first electrode (12c, 12d) to the second electrode (13e, 13f, 13g) or from the second electrode (13e, 13f, 13g) to the first electrode (12c, 12d).

2. A method according to claim 1, wherein the regional structuring of the second metal layer (3) for exposing the first electrode contact region (2c, 2d) of the first metal layer (2) is carried out by way of wet-etching, by way of laser ablation or by way of a mechanical method, in particular by way of drilling, milling, cutting or punching and/or wherein the regional structuring of the insulator layer (4) for exposing the first electrode contact region (2c, 2d) of the first metal layer (2) is carried out by way of dry-etching, by way of laser ablation or by way of a mechanical method, in particular drilling, milling, cutting or punching.

3. A method according to claim 2, wherein the second metal layer (3) is coated over the whole surface for forming the insulator layer (4), so that the second metal layer (3) and the insulator layer (4) form a composite, wherein a through-hole is incorporated into the composite, for structuring the second metal layer (3) and the insulator layer (4), and the composite with the through-hole incorporated into the composite is laminated onto the first metal layer (2) for forming the layered structure (1), so that the first electrode contact region (2c, 2d) is exposed at the upper side of the first metal layer (2), in the region of the through-hole.

4. A method according to one of the preceding claims, wherein a further insulator layer (9; 10) is deposited by way of spray coating, electrophoresis, parylene plasma polymerisation, laminating or screen printing, for forming the separator structure (9c, 9d; 10c, 10d; 19c, 19d).

5. A method according to claim 4, wherein the further insulator layer (9; 10) at least regionally is deposited on the first electrode contact region (2c, 2d) of the first metal layer (2) and wherein the further insulator layer (9; 10) is structured by way of photolithography, by way of dry-etching or by way of laser ablation, for the at least partial exposure of the first electrode contact region (2c, 2d) of the first metal layer (2) and/or wherein the further insulator layer (9; 10) is deposited at least regionally on the second metal layer (3) and wherein the further insulator layer (9; 10) is structured by way of photolithography, by way of dry-etching or by way of laser ablation, for exposing at least a second electrode contact region (3e, 3f, 3g) of the second metal layer (3) at an upper side (3a) of the second metal layer (3).

6. A method according to one of the claims 1 to 3, wherein the formation of the separator structure (19c, 19d) comprises the following steps:
- depositing a temporary photoresist;
- regionally removing the temporary photoresist by way of photolithography, for creating a hole in the temporary photoresist;
- depositing an ionically conductive separator mass in the hole, for forming the separator structure (19c, 19d).

7. A method according to claim 6, wherein the separator structure (19c, 19d) is impregnated with a liquid electrolyte for forming the ion conductor (14; 22a; 22b; 22c).

8. A method according to one of the preceding claims, wherein the formation of the first electrode (12c, 12d) and/or of the second electrode (13e, 13f, 13g) is carried out by way of sputtering, reactive vapour deposition, screen printing, stencil printing, dispensing or by way of a galvanic deposition process.

9. A method according to one of the preceding claims, wherein a polymer ion conductor, a solid-body ion conductor, a gelifying liquid electrolyte or a sponge-like structure impregnatable with a liquid electrolyte are deposited for forming the ion conductor (14; 22a; 22b; 22c).

10. A method according to one of the preceding claims, wherein a frame (50; 18b) is arranged on the second metal layer (3), for receiving a liquid electrolyte, said frame preventing the liquid electrolyte from flowing away, wherein the frame is fastened on the second metal layer (3) by way of bonding, soldering or ultrasonic welding.

11. A method according to one of the preceding claims, wherein the first electrode (12c, 12d), the second electrode (13e, 13f, 13g) and the separator structure (9c, 9d; 10c, 10d; 19c, 19d) are designed in a manner such that the first electrode (12c, 12d) extends from the upper side (2a) of the first metal layer (2) to beyond the upper side (3a) of the second metal layer (3) and that the separator structure (9c, 9d; 10c, 10d; 19c, 19d) extends from the upper side (2a) of the first metal layer (2) at least up to the upper end of the first electrode (12c, 12d) which is away from the first metal layer (2), preferably to beyond the upper end of the first electrode (12c, 12d), so that the first electrode (12c, 12d) and the second electrode (13e, 13f, 13g) are separated from one another along planes running parallel to layers of the layered structure (1), by way of the separator structure (9c, 9d; 10c, 10d; 19c, 19d).

12. A microbattery (100; 200; 300; 400; 500) comprising:
- a layered structure (1) with a first metal layer (2) forming a first current collector, with a second metal layer (3) forming a second current collector, and with a insulator layer (4) which is arranged between the first metal layer (2) and the second metal layer (3) and which electrically insulates the first metal layer (2) from the second metal layer (3);
- a first electrode (12c, 12d) and a second electrode (13e, 13f, 13g);
- a separator structure (9c, 9d; 10c, 10d; 19c, 19d);
- an ion conductor (14, 22a; 22b; 22c) which contacts the first electrode (12c, 12d) and the second electrode (13e, 13f, 13g), so that ions can travel via the ion conductor (14; 22a; 22b; 22c) from the first electrode (12c, 12d) to the second electrode (13e, 13f, 13g) or from the second electrode (13e, 13f, 13g) to the first electrode (12c, 12d);
- wherein the first electrode (12c, 12d) electrically contacts the first metal layer (2) at an upper side of the first metal layer (2) which faces the insulator layer (4) and wherein the first electrode engages (12c, 12d) through the insulator layer (4) and through the second metal layer (3) and projects beyond an upper side of the second metal layer (3) which is away from the insulator layer (4);
- wherein the second electrode (13e, 13f, 13g) contacts the second metal layer (2); and
- wherein the separator structure (9c, 9d; 10c, 10d; 19c, 19d) encloses or enwalls the first electrode (12c, 12d) and extends from the upper side (2a) of the first metal layer (2) at least up to the upper side (3a) of the second metal layer (3), so that the separator structure (9c, 9d; 10c, 10d; 19c, 19d) electrically insulates the first electrode (12c, 12d) from the second metal layer (3).

13. A microbattery (100; 200; 300; 400; 500) according to claim 12, wherein the first metal layer (2) is formed from aluminium for forming and/or for contacting the plus pole of the microbattery (100; 200; 300; 400; 500), and wherein the second metal layer (3) is formed from copper for forming and/or contacting the minus pole of the battery.

14. A microbattery (100; 200; 300; 400; 500) according to one of the claims 12 and 13, each with several first (12c, 12d) and second electrodes (13e, 13f, 13g), wherein the first (12c, 12d) and the second electrodes (13e, 13f, 13g) are arranged in strips or in a chequered manner.

15. A microbattery (100; 200; 300; 400; 500) according to one of the claims 12 to 14, wherein the separator structure (9c, 9d; 10c, 10d; 19c, 19d) extends at least up to the upper end of the first electrode (12c, 12d) which is away from the first metal layer (2), so that the first electrode (12c, 12d) and the second electrode (13e, 13f, 13g) are separated from one another along planes running parallel to the planes of the layered structure (1), by way of the separator structure (9c, 9d; 10c, 10d; 19c, 19d).

## Revendications

1. Procédé de fabrication d'une microbatterie (100 ; 200 ; 300 ; 400 ; 500) comprenant les étapes:
- formation d'une structure en couches (1) avec une première couche métallique (2) destinée à former un premier collecteur de courant, avec une deuxième couche métallique (3) destinée à former un deuxième collecteur de courant, et avec une couche d'isolant (4) disposée entre la première couche métallique (2) et la deuxième couche métallique (3), de sorte que la couche d'isolant (4) isole électriquement la première couche métallique (2) de la deuxième couche métallique (3) ;
- structuration par endroits de la deuxième couche métallique (3) et de la couche d'isolant (4) pour la mise à nu d'au moins une première zone de contact d'électrode (2c, 2d) de la première couche métallique (2) sur une face supérieure (2a) de la première couche métallique (2) orientée vers la couche d'isolant (4) ;
- formation d'une première électrode (12c, 12d) de telle manière que la première électrode (12c, 12d) est en contact électrique au niveau de la première zone de contact d'électrode (2c, 2d) mise à nu avec la première couche métallique (2) et que la première électrode (12c, 12d) passe à travers la couche d'isolant (4) et la deuxième couche métallique (3) et dépasse vers l'extérieur par-dessus une face supérieure (3a) de la deuxième couche métallique (3) à l'opposé de la couche d'isolant (4) ;
- formation d'une structure de séparateur (9c, 9d ; 10c, 10d ; 19c, 19d) de telle manière que la structure de séparateur (9c, 9d ; 10c, 10d ; 19c, 19d) entoure ou enlace la première électrode (12c, 12d) et s'étend à partir de la face supérieure (2a) de la première couche métallique (2) au moins jusqu'à la face supérieure (3a) de la deuxième couche métallique (3), de sorte que la structure de séparateur (9c, 9d ; 10c, 10d ; 19c, 19d) isole la première électrode (12c, 12d) de la deuxième couche métallique (3) ;
- formation d'au moins une deuxième électrode (13e, 13f, 13g) sur la deuxième couche métallique (3) de sorte que la deuxième électrode (13^{e}, 13f, 13g) est en contact électrique avec la deuxième couche métallique (3) ;
- formation d'un conducteur ionique (14 ; 22a ; 22b ; 22c) de telle manière que le conducteur ionique (14 ; 22a ; 22b ; 22c) est en contact avec la première électrode (12c, 12d) et la deuxième électrode (13e, 13f, 13g) de sorte que des ions peuvent migrer par le biais du conducteur ionique (14 ; 22a ; 22b ; 22c) à partir de la première électrode (12c, 12d) vers la deuxième électrode ou à partir de la deuxième électrode (13e, 13f, 13g) vers la première électrode (12c, 12d).

2. Procédé selon la revendication 1, dans lequel la structuration par endroits de la deuxième couche métallique (3) pour la mise à nu de la première zone de contact d'électrode (2c, 2d) de la première couche métallique (2) est réalisée au moyen d'une gravure par voie humide, au moyen d'une ablation par laser ou au moyen d'un procédé mécanique, notamment d'un perçage, d'un fraisage, d'une découpe ou d'un estampage, et/ou dans lequel la structuration par endroits de la couche d'isolant (4) pour la mise à nu de la première zone de contact d'électrode (2c, 2d) de la première couche métallique (2) est réalisée au moyen d'une gravure à sec, au moyen d'une ablation par laser ou au moyen d'un procédé mécanique, notamment, d'un perçage, d'un fraisage, d'une découpe ou d'un estampage.

3. Procédé selon la revendication 2, dans lequel la deuxième couche métallique (3) est revêtue sur toute la surface pour la formation de la couche d'isolant (4), de sorte que la deuxième couche métallique (3) et la couche d'isolant (4) forment un composite, où, pour la structuration de la deuxième couche métallique (3) et de la couche d'isolant (4), un trou de passage est aménagé dans le composite et le composite avec le trou de passage aménagé dans le composite est laminé sur la première couche métallique (2) pour la formation de la structure en couches (1), de sorte que la première zone de contact d'électrode (2c, 2d) est mise à nu sur la face supérieure de la première couche métallique (2) dans la zone du trou de passage.

4. Procédé selon l'une des revendications précédentes, dans lequel, pour la formation de la structure de séparateur (9c, 9d ; 10c, 10d ; 19, 19d), une autre couche d'isolant (9 ; 10) est aménagée au-dessus au moyen d'une pulvérisation de laque, d'une électrophorèse, d'une plasma polymérisation de parylène, d'un laminage ou d'une sérigraphie.

5. Procédé selon la revendication 4, dans lequel l'autre couche d'isolant (9 ; 10) est séparée au moins par endroits de la première couche métallique (2) sur la première zone de contact d'électrode (2c, 2d) et où l'autre couche d'isolant (9 ; 10) est structurée pour une mise à nu au moins par endroits de la première zone de contact d'électrode (2c, 2d) de la première couche métallique (2) au moyen de la photolithographie, au moyen de la gravure à sec ou au moyen de l'ablation par laser, et/ou où l'autre couche d'isolant (9 ; 10) est déposée au moins par endroits sur la deuxième couche métallique (3), et où l'autre couche d'isolant (9 ; 10) est structurée pour la mise à nu d'au moins une deuxième zone de contact d'électrode (3^{e}, 3f, 3g) de la deuxième couche métallique (3) au niveau d'une face supérieure (3a) de la deuxième couche métallique (3) au moyen de la photolithographie, au moyen de la gravure à sec ou au moyen de l'ablation par laser.

6. Procédé selon l'une des revendications 1 à 3, dans lequel la formation de la structure de séparateur (19c, 19d) comprend les étapes suivantes :
- dépôt d'une résine photosensible temporaire ;
- retrait par endroits de la résine photosensible temporaire au moyen de la photolithographie afin de produire une cavité dans la résine photosensible ;
- dépôt d'une masse de séparateur conductrice ionique dans la cavité pour la formation de la structure de séparateur (19c, 19d).

7. Procédé selon la revendication 6, dans lequel la structure de séparateur (19c, 19d) est imbibée d'un électrolyte liquide pour la formation du conducteur ionique (14; 22a ; 22b ; 22c).

8. Procédé selon l'une des revendications précédentes, dans lequel la formation de la première électrode (12c, 12d), et/ou de la deuxième électrode (13e, 13f, 13g), est effectuée par une pulvérisation cathodique, une vaporisation réactive, une sérigraphie, une impression par stencil, une distribution ou au moyen d'un procédé de dépôt galvanique.

9. Procédé selon l'une des revendications précédentes, dans lequel, pour la formation du conducteur ionique (14 ; 22a ; 22b ; 22c), un conducteur d'ions polymériques, un conducteur ionique solide, un électrolyte liquide gélifiant ou une structure de type spongieuse pouvant être imprégnée avec un électrolyte liquide, est déposé.

10. Procédé selon l'une des revendications précédentes, dans lequel, pour la réception d'un électrolyte liquide, un cadre (50 ; 18b), qui empêche un écoulement de l'électrolyte liquide, est disposé sur la deuxième couche métallique (3), où le cadre est fixé sur la deuxième couche métallique (3) au moyen d'un collage, d'un brasage ou d'un soudage par ultrasons.

11. Procédé selon l'une des revendications précédentes, dans lequel la première électrode (12c, 12d), la deuxième électrode (13e, 13f, 13g) et la structure de séparateur (9c, 9d ; 10c, 10d ; 19c, 19d) sont conçues de telle manière que la première électrode (12c, 12d) s'étend vers l'extérieur à partir de la face supérieure (2a) de la première couche métallique (2) jusqu'au dessus de la face supérieure (3a) de la deuxième couche métallique (3), et que la structure de séparateur (9c, 9d ; 10c, 10d ; 19c, 19d) s'étend de la face supérieure (2a) de la première couche métallique (2) au moins jusqu'à l'extrémité supérieure de la première électrode (12c, 12d) à l'opposé de la première couche métallique (2), de préférence jusqu'au dessus au-delà de l'extrémité supérieure de la première électrode (12c, 12d), de sorte que la première électrode (12c, 12d) et la deuxième électrode (13e, 13f, 13g) sont séparées l'une de l'autre le long de plans s'étendant parallèlement par rapport aux couches de la structure en couches (1) par la structure de séparateur (9c, 9d ; 10c, 10d ; 19c, 19d).

12. Microbatterie (100 ; 200 ; 300 ; 400 ; 500) comprenant :
- une structure en couches (1) avec une première couche métallique (2), qui forme un premier collecteur de courant, avec une deuxième couche métallique (3), qui forme un deuxième collecteur de courant, et une couche d'isolant (4) disposée entre la première couche métallique (2) et la deuxième couche métallique (3), qui isole électriquement la première couche métallique (2) de la deuxième couche métallique (3) ;
- une première électrode (12c, 12d) et une deuxième électrode (13e, 13f, 13g) ;
- une structure de séparateur (9c, 9d ; 10c, 10d ; 19c, 19d) ;
- un conducteur ionique (14 ; 22a ; 22b ; 22c) qui est en contact avec la première électrode (12c, 12d) et la deuxième électrode (13e, 13f, 13g), de sorte que des ions peuvent se déplacer par le biais du conducteur ionique (14 ; 22a ; 22b ; 22c) de la première électrode (12c, 12d) vers la deuxième électrode (13e, 13f, 13g) ou de la deuxième électrode (13e 13f, 13g) vers la première électrode (12c, 12d) ;
où la première électrode (12c, 12d) est électriquement en contact avec la première couche métallique (2) au niveau d'une face supérieure de la première couche métallique (2) orientée vers la couche d'isolant (4), et où la première électrode (12c, 12d) passe à travers la couche d'isolant (4) et la deuxième couche métallique (3) et dépasse vers l'extérieur à partir de la face supérieure de la deuxième couche métallique (3) à l'opposé de la couche d'isolant (4) ;
où la deuxième électrode (13e, 13f, 13g) est en contact avec la deuxième couche métallique (3), et
où la structure de séparateur (9c, 9d ; 10c, 10d ; 19c, 19d) entoure ou enlace la première électrode (12c, 12d) et s'étend à partir de la face supérieure (2a) de la première couche métallique (2) au moins jusqu'à la face supérieure (3a) de la deuxième couche métallique (3), de sorte que la structure de séparateur (9c, 9d ; 10c, 10d ; 19c, 19d) isole électriquement la première électrode (12c, 12c) de la deuxième couche métallique (3).

13. Microbatterie (100 ; 200 ; 300 ; 400 ; 500) selon la revendication 12, dans laquelle la première couche métallique (2) destinée à la formation et/ou à la mise en contact du pôle plus de la microbatterie (100 ; 200 ; 300 ; 400 ; 500) est conçue en aluminium et dans laquelle la deuxième couche métallique (3) destinée à la formation et/ou à la mise en contact du pôle moins de la batterie est conçue en cuivre.

14. Microbatterie (100 ; 200 ; 300 ; 400 ; 500) selon l'une des revendications 12 et 13, avec respectivement plusieurs premières (12c, 12d) et deuxièmes (13e, 13f, 13g) électrodes, où les premières et les deuxièmes électrodes (13e, 13f, 13g) sont disposées en bandes ou comme dans un échiquier.

15. Microbatterie (100 ; 200 ; 300 ; 400 ; 500) selon l'une des revendications 12 à 14, dans laquelle la structure de séparateur (9c, 9d ; 10c, 10d ; 19c, 19d) s'étend au moins jusqu'à l'extrémité supérieure de la première électrode (12c, 12d) à l'opposé de la première couche métallique (2), de sorte que la première électrode (12c, 12d) et la deuxième électrode (13e, 13f, 13g) sont séparées l'une de l'autre par la structure de séparateur (9c, 9d ; 10c, 10d ; 19c, 19d) le long des plan s'étendant parallèlement par rapport aux couches de la structure en couches (1).
